# EUROPEAN PATENT SPECIFICATION

(11) **EP 3 522 752 B1**
(45) Date of publication and mention of the grant of the patent: **31.05.2023**
(21) Application number: 17781446.4
(22) Date of filing: 02.10.2017
(51) Int. Cl.: A46B 15/00, A61C 17/22, A46B 11/00

(54) **SMART TOOTHBRUSH**
INTELLIGENTE ZAHNBÜRSTE
BROSSE À DENTS INTELLIGENTE

(30) Priority: 07.10.2016 EP 16192929
(43) Date of publication of application: 14.08.2019
(73) Proprietor: Unilever IP Holdings B.V., 3013 AL Rotterdam (NL); Unilever Global IP Limited, Wirral, Merseyside CH62 4ZD (GB)
(72) Inventor: RUSSELL, Adam Thomas, Wirral CH62 9AB (GB); SAVILL, Derek, Guy, Bebington Wirral Merseyside CH63 3JW (GB); TRELOAR, Robert Lindsay, Bebington Wirral Merseyside CH63 3JW (GB); ZILLMER, Ruediger, Bebington Wirral Merseyside CH63 3JW (GB)
(74) Representative: Tansley, Sally Elizabeth
(86) International application number: PCT/EP2017/074999
(87) International publication number: WO 2018/065373

(56) References cited:
- EP-A2- 2 896 319
- US-A1- 2008 109 973
- US-A1- 2015 044 629

## Description

### Field of the Invention

The present invention relates to a tracking system for recording the position of a toothbrush during toothbrushing, more particularly to a tracking system including a magnetic field generator and a smart toothbrush, the smart toothbrush including: an orientation sensor, a sensor for detecting contact between the toothbrush and the jaw of a user, and a magnetic sensor.

### Background of the invention

The practice of brushing one's teeth is well established and for many people has been a part of their morning and evening routines for longer than they can remember. However, there is growing evidence that success of dental care depends not only on the whether an individual brushes their teeth or not, but also on their toothbrushing technique.

High resolution brush tracking in dental surgeries is known (Oral-Insights, US 20120310593 A1) but uses complex magnetic fields and extensive hardware making it time consuming and difficult to use. Furthermore, the user must go out of their way to visit a dental surgery with the necessary facilities. There is a need for more user friendly systems, particularly ones which enable the user to assess their toothbrushing technique in an everyday scenario at home, without the presence of a dental professional.

Home-based technologies exist for monitoring toothbrushing. Such technologies allow mobile assessment and feedback of brushing performance using either a standalone electronic brush or a brush in combination with a mobile device system. The majority of these systems are significantly lacking in accuracy when compared to the accuracy that can be achieved by the Oral Insights system.

The efficiency of toothbrushing depends not only on the regions of the mouth visited, but also on the path taken between these regions, the order in which they are visited, and the time spent at each region. These features together define the journey of a toothbrushing session. Often, users will unwittingly follow a journey through force of habit or routine, with no particular goal in mind. This can lead to some areas of the mouth receiving better or worse treatment.

Devices which provide toothbrush positional data are known. However, existing toothbrush monitoring devices treat the regions of the mouth in isolation, ignoring the temporal order in which these regions are visited and/or the brushing path taken. Since these existing devises do not provide information relating to the time-course (i.e. the order or journey) of brushed areas, they cannot therefore provide the user with any information relating to the efficiency of their brushing technique.

As described above, toothbrushes with sensors to determine and/or track the position within a user's mouth are known. However, a trade off exists between accuracy and inconvenience for the user. It is known that magnetic fields and magnetometers can be used to determine precise positions of the toothbrush during brushing in a lab or dental surgery. There exists a need for a system which is capable of measuring the actual position of a toothbrush in a user's mouth accurately during brushing in a home environment.

Methods for tracking and assessing brushing activity may be affected by strong noise and variability. A significant part of the noise can be removed by accurately detecting the onset of brushing action, i.e., contact of the bristles with a tooth or gum surface. For manual brushes this can be achieved by a combination of activity and sound-level measurement (US20130166220 A1).

US2015044629 is directed to oral care systems having an oral care tool and a first software application. The oral care tool includes a cleaning module, a sensing module and a communications module. The first software application is run on a computing device, such as a mobile computing device, that receives the data from the sensing module and reproduces a simulated image reflecting the result of brushing. The mobile computing device can be linked to a cloud server that receives data from the first software application and saves detailed brushing data for each user. The first software application visualizes brushing and transforms brush into fun game. The cloud server collects and stores the detailed brushing data and provides it to users and care providers. The sensing module can be comprised of multiple sensors (e.g., two, three, or more sensors). Examples of such sensors include 3-axis accelerometers, magnetometers, gyroscopes, pressure sensors, load sensors, and Hall Effect sensors.

### Summary of the Invention

The invention is defined by the claims. A number of aspects of the present disclosure are also disclosed. According to a first aspect of the present disclosure, a method of monitoring toothbrushing comprising:
a **coaching phase** in which:
   a position sensor detects position information of a toothbrush during a first instance of free brushing by the user;
   one or more additional sensors record movement information of the toothbrush during the first instance of free brushing;
   a user-specific statistical model is generated which maps the positional information onto the movement information; and
a **monitoring phase** in which:
   the one or more additional sensors record movement information of the toothbrush during a second instance of free brushing; and
   the toothbrush compares the movement information received during the second instance of free brushing with the user-specific statistical model to calculate positional information.

In this way, the method provides two separate phases: a coaching phase and a monitoring phase. By producing an adapted statistical model during the coaching phase and using it during the monitoring phase, it is possible to carry out the monitoring phase at home but to still benefit from more accurate monitoring usually restricted to systems at the dentist and/or hygienist. In addition, both steps can be carried out during a user's free brushing. Not only does this result in a more user-friendly device, but it also eliminates erroneous reading that can arise due to the user following "guide"-type instructions.

This is a significant improvement upon alternative calibration methods in which the user must follow pre-set paths to brush certain regions while the sensor data are used to adapt the prediction model. Any pre-set paths/regions of such calibration methods are often extremely different from the user's natural brushing habit. Not only does this make the coaching difficult to follow, but it can also adversely affect the performance of the prediction models for free-brushing feedback.

The proposed technology helps customers to brush their teeth better by improving the quality and user experience during the coaching phase and thus the value of the free brushing assessment and feedback.

Optionally, the **coaching phase** comprises the steps of:
providing a smart toothbrush, the smart toothbrush comprising at least one position sensor and at least one accelerometer;
providing an external position sensor;
detecting position information of a toothbrush during a first instance of free brushing by the user using the relative position of the position sensor on the smart toothbrush and the external position sensor;
recording movement information of the toothbrush during the first instance of free brushing using the accelerometer; and
generating a user-specific statistical model which maps the positional information onto the movement information.

The step of detecting position information of the toothbrush may include recording accelerometer data from an accelerometer located on or within the toothbrush and also recording of positional data from the external position sensor. Each of the toothbrush and the external sensor may send their data separately to an external computer which processes the information received and correlates acceleration measurements from the toothbrush with the positional information from the external sensor. For example, in some embodiments, a timestamp created upon turning on the toothbrush or in response to any specific stimulus at the toothbrush provides a reference point for the comparison and combination of the two sets of data. In some embodiments, the external computer takes the form of a mobile device.

The step of generating a user-specific statistical model from the combined data may take the form of multivariate classification models which may be trained for each user. In some embodiments, a multivariate normal approximation may be applied in addition to a Mahalanobis distance or multimodal probability in order to select either the most likely position or to assign weight (likelihood) to particular positions (which may correspond to particular segments at the user interface).

Optionally, the **monitoring phase** comprises the steps of:
providing a mobile device;
recording movement information of the toothbrush during a second instance of free brushing using the accelerometer; and
comparing the movement information received during the second instance of free brushing with the user-specific statistical model to provide positional information;
displaying the positional information to the user on the mobile device.

It should be understood that "free brushing" is simply referring to the user brushing their teeth as normal with no instructions. The opposite of free brushing would be following instructions e.g. "brush top left teeth inner surface".

Optionally, the coaching phase includes an alternative coaching model in which the user follows an instruction guide on a mobile device, wherein the user-specific statistical model generated by the alternative coaching model maps the positional information displayed on the mobile device onto the movement information received simultaneously from the one or more additional sensors.

In this way, the device can still be used without requiring a positional input to the toothbrush. It may be appreciated that this "guide mode" may be less accurate than the "free brushing" coaching mode; however the provision of both modes in one system allows for a more flexible device.

Optionally, the position sensor includes an external head-mounted sensor.

In some embodiments, the transmitter produces a magnetic field in frame of reference of the jaw. The position sensor in the brush samples the field and data generated at a given sample rate is sent back to the base station. Communication between the external position sensor, toothbrush and external computer are preferably wireless.

Optionally, the position sensor includes an external wall-mountable sensor.

Optionally, the position sensor is located within a wall mountable mirror.

Optionally, the position sensor is a magnetic field generator and a corresponding magnetic field sensor, the magnetic field sensor being located on the toothbrush.

Optionally, the magnetic generator is wearable by the user.

Optionally, the magnetic generator is wall mounted. For example as part of, or attached to a mirror.

The magnetic field generator may take the form of a DC magnetic field, such as the switching DC magnetic field technology from Asencion technology corporation. However, the skilled person would appreciate that other commercial magnetic field generators are available.

According to a second aspect of the present disclosure, there is provided a system for coaching a smart toothbrush, the system comprising:
a position sensor detects position information of a toothbrush during a first instance of free brushing by the user;
one or more additional sensors located on the toothbrush which record movement information of the toothbrush during the first instance of free brushing; and
a computer comprising a memory and a processor, the processor programmed to generate a user-specific statistical model by mapping the positional information from the position sensor onto the movement information from the one or more additional sensors to create a look-up table stored in the memory.

Any of the optional features discussed above in relation to the first aspect could also be applied to the second aspect.

According to a third aspect of the present disclosure, there is provided a smart toothbrush comprising:
a toothbrush body, comprising a head for brushing and a handle;
a sensor for detecting the position of the toothbrush in the mouth at various points during a toothbrushing session;
a timer for recording the time at which each detected position occurs; and
a computing module with a memory, the computing module configured to:
   record the detected position at various points during a toothbrushing session;
   record the time at which each detected position was detected; and produce a map of the journey taken by the toothbrush during the toothbrushing session using the recorded position and time information.

In this way, enhanced information relating to the efficiency of a user's toothbrushing technique is provided for the user. The efficiency of toothbrushing depends on the path taken by the toothbrush during toothbrushing. This aspect provides information relating to the position of the brush at various given times and uses this to track the time-course (i.e. the order) of brushed areas as well as the transitions from one brushed area to another.

By map of the journey, it should be understood that the spatiotemporal path taken by the toothbrush is produced from the recorded data. In this way, it is possible to generate far more useful data than could be generated by simply recording individual positions. The recordal of the temporal order in which different mouth regions are brushed enables provision of a more meaningful and personalized feedback and recommendations.

For example, by recording an entire "journey" or "walk" of the toothbrush around the mouth it is possible to determine whether parts of the mouth are being neglected. Where the path recorded shows that at particular user tends to end their brushing session at a particular location of their mouth, it is likely that this area will not be receiving the same levels of attention to detail as those areas of the mouth which are targeted at the beginning of the brushing journey. It is therefore useful for the user to be alerted to this.

Similarly, the recordal of the journey may indicate that certain areas of the mouth are missed out altogether or very rarely visited. This kind of neglect can lead to an increase in plaque and staining, and potentially to a deteriorating appearance of teeth and/or gum disease.

Upon being alerted to this kind of oversight, the user can adapt their brushing journey accordingly, to find a more optimal path, with optimal transitions from one area of the mouth to another. In this way, it is possible for the user to minimise any adverse effect on their oral health caused by accidental neglect and/or poor brushing technique.

Optionally, the computing module is programmed to use a travelling salesman machine learning algorithm to process the recorded position and time information and produce a map of an optimal path to be taken by the toothbrush during the toothbrushing session.

It will be understood that a travelling salesman approach to optimal route finding is one example of possible route/path finding algorithms that may be applicable for determining an optimal path to be taken by the toothbrush during a toothbrushing session.

A travelling salesman machine learning algorithm may take the form of any algorithm which solves "the travelling salesman problem". In other words, the algorithm receives a number of data points (a "transition matrix"); in this case, the data points may correspond to a plurality of positions in the mouth and associated timings. This information is converted into a cost function for each possible transition between data points. The algorithm then determines the minimum cost route between the different data points. Along the route, each of the positions in the mouth may be "visited" by the toothbrush more than once. In other words, the route may include brushing one of more of the positions in the mouth more than once.

In this way, an example method of optimizing the path for a given individual is provided. This may take into account user-specific issues such as sensitivity, missing or misaligned teeth, and other problem areas. By inverting the transition matrix, a least optimal path could be calculated.

Optionally, the toothbrush body further comprises:
a reservoir for an active ingredient, the reservoir in fluid communication with the head portion; and
a dispenser for dispensing the active ingredient from the reservoir via the head upon receipt of an activation signal.

In this way, the "smart" toothbrush is capable of dispensing an active ingredient based on information received by the toothbrush.

Advantageously, this enables an active ingredient to be more precisely dispensed. This avoids many of the problems associated with regular toothbrushing in which an active ingredient is pre-loaded onto the head of the brush before the brushing episode begins. One such disadvantage is the fact that users often start a brushing episode at a particular location and follow an automatic brushing pattern or journey, meaning that certain areas of the mouth (usually those contacted at the start of the brushing episode) routinely receive more of the active ingredient than others. By selectively dispensing the active ingredient in response to sensor information, it is also possible to better control wastage of the active ingredient (e.g. due to spitting out or undissolved ingredients). It is also possible to avoid over application of active ingredients such as bleach which could be damaging to the user if applied in excess.

Optionally, the activation signal is triggered in response to information from the sensor.

Optionally, the information detected by the sensor includes:
location within a predefined map of the user's mouth.

The predefined map of the user's mouth may correspond to the 10 segments described herein.

Optionally, the information detected by the sensor includes timing information. The start of timing may be triggered by a single event such a sensor threshold being reached, a change in direction being detected, a change in acceleration being detected. In other events the start of timing may be triggered when two or more sensors simultaneously record a threshold value (e.g. the microphone and accelerometer simultaneously recording sound and movement measurements).

In some embodiments, a timestamp may be made for each record, starting either at brush turn-on or at start of brushing. Where the timestamps (and associated recorded data) are recorded from the brush-turn-on, an extra step of determining the start of brushing may also be incorporated. Suitable mechanisms for starting the brushing are described herein.

Optionally, the smart toothbrush further comprises at least one additional reservoir(s).

In this way, more than one active ingredient may be applied to one or more regions of the mouth during the same brushing episode. For example, the active located within the additional reservoir may provide an additional care step which complements a first active, such as toothpaste located within the first reservoir. An example of such an additional care step is gum conditioning serum.

The different actives may be dispensed at the same time as one another, or at different times to one another. Where different actives are applied at different times, each active will be triggered by a different sensor reading. For example, when the sensor detects that the toothbrush head is in a first predetermined location within the mouth, a first active may be dispensed from the first reservoir. When the sensor detects that the toothbrush head is in a second predetermined location within the mouth, a second active may be dispensed from the second reservoir.

In other embodiments, a second active may be dispensed from the at least one additional reservoir simultaneously with the dispensed first active from the first reservoir.

Separate reservoirs enable separate storage of actives which may be incompatible with one another.

Optionally, the smart toothbrush further comprises a sound sensor for detecting contact between the head of the toothbrush and the jaw of the user.

Optionally, the map of the journey is displayed on a mobile device.

In some embodiments, raw data is processed on brush, then position and time stamp sent via wireless communication methods to the external computer (which may take the form of a mobile device such as a mobile phone or tablet but may also take the form of a smart mirror or wall-mounted computer screen). In other embodiments, the raw data itself is transmitted to the external computer and subsequently processed at the external computer (again, this may take the form of a mobile device such as a mobile phone or tablet). Wireless communication may take the form of Bluetooth, Wi-Fi or similar.

According to a fourth aspect of the present disclosure, there is provided: a tracking system for recording the position of a toothbrush during toothbrushing, the system comprising:
a toothbrush, the toothbrush comprising:
a head portion;
a handle portion
an orientation sensor;
a sensor for detecting contact between the toothbrush and the jaw of a user; and
a magnetic sensor; and
a magnetic field generator;
wherein:
   the magnetic sensor detects the absolute position of the toothbrush within the field created by the magnetic field generator.

In this way, it is possible to provide accurate tracking of the toothbrush position in the mouth. The use of a combination of inertial measurement sensors, sound, and a bespoke magnetic field achieve high-resolution toothbrush tracking. In particular, the magnetic field is generated by wearable magnets or field generators, allowing low-cost design and easy use of the system in dentist practices or at home.

Optionally, the orientation sensor is an accelerometer or an inertial measurement unit for measuring the rotational position of the toothbrush.

Optionally the sensor for detecting contact between the toothbrush and the jaw of the user is a sound sensor; and wherein, upon detection by the sound sensor of contact between the toothbrush and the jaw, the measurement of position within the magnetic field is restricted to a measurement of position along a known, pre-calibrated, one-dimensional jaw line.

Optionally the magnetic field generator is a wearable magnetic field generator;
wherein the magnetic sensor detects the absolute position of the toothbrush within the field created by the magnetic field generator.

Optionally the magnetic field is tuned to generate iso-surfaces of magnitude which lie perpendicular to the jaw.

In this way, small position changes along the iso-surfaces around any one of the teeth (e.g., varying distance between brush head and tooth surface) do not affect the measurement, leading to a more robust system.

Optionally the magnetic sensor comprises a processor which detects the absolute position of the toothbrush by measuring the field magnitude, M of the brush and the vertical field component M_{z} of the brush.

The field magnitude M is given by: M=sqrt(Mₓ²+M_{y}²+M_{z}²) where (Mₓ²+M_{y}²+M_{z}²) are the field components in the x, y and z directions respectively. M is therefore invariant under device rotations.

In some embodiments, an initial calibration step is carried out to create a look-up table for correlating measured magnetic field values with position information. One such calibration step is carried out by initially moving a magnetometer probe in a controlled way, tooth-by-tooth along predetermined points along the jaw of the user, for example along the centres of the biting surfaces of each tooth. The resulting magnetometer readings are stored in the look-up table alongside the predetermined position points.

In the actual toothbrush, the magnetometer will have a known separation from the head of the toothbrush which contacts the surface of the user's teeth. This separation can be adjusted for, by using a pre-determined model. Since the level of adjustment may depend upon the orientation of the brush, the orientation of the brush can be taken from accelerometer data and incorporated into the model.

The vertical field component M_{z} can be obtained by measuring the field and accelerations of an arbitrary rotated device, since M_{z} = aₓ×mₓ + a_{y}×m_{y} + a_{z}×m_{z} where mₓ, m_{y} and m_{z} are the measured fields of the arbitrary device, and aₓ, a_{y}, a_{z} correspond to the (normalised) measured accelerations of the arbitrary rotated device. Values of acceleration such as acceleration due to gravity are desired to obtain information about the orientation of the brush (rather than information about the kinetic acceleration of the brush) and may be obtained by applying low pass filtering to the overall output obtained from the accelerometer, the overall output containing contributions from gravitational acceleration and also contributions from kinetic acceleration.

Optionally the toothbrush comprises:
an electric motor and/or vibrator for providing movement and/or rotation of the head of the toothbrush;
and a sound receiver for detecting changes in frequency of the electric motor and/or vibrator when the toothbrush is in contact with a tooth.

In this way, it is possible to provide an electronic or a sonic toothbrush capable of measuring positional information of the toothbrush when the toothbrush is in contact with teeth. In particular, how to do this without requiring a substantial computational resource.

Optionally the toothbrush comprises a data logger for recording data from the magnetic sensor and/or the orientation sensor;
wherein the data logger is only activated when the sound receiver detects a value which meets a predetermined threshold criterion.

Optionally the data logger comprises a memory for recording the detected orientation information and a processor programmed to convert this orientation information into positional information. In some embodiments, the processor is configured to carry out multivariate classification which typically involves a trained lookup of cluster parameters used to classify new data.

Optionally the sound receiver includes a frequency filter for detecting changes in frequency of the electric motor and/or vibrator when the toothbrush is in contact with a tooth; and
wherein the data logger is only activated when the sound receiver detects a value which meets a predetermined threshold criterion.

Optionally the sensor for detecting contact between the toothbrush and the jaw of a user is:
a pressure sensor; or
an accelerometer.

The pressure sensor may take the form of a piezoelectric material which generates a voltage when pressure applied to the head of the toothbrush is referred to the piezoelectric material. In some embodiments, the bristles of the toothbrush may directly transfer pressure from the interaction between the user's jaw and the toothbrush head to the piezoelectric material. In other embodiments, pressure may be applied to the piezoelectric material by a flexible portion of the body of the toothbrush, usually its neck.

According to a fifth aspect of the present disclosure, there is provided a toothbrush comprising:
a body including: a head portion and a handle portion;
the body further comprising:
   at least one sensor and a reservoir for an active ingredient, the reservoir in fluid communication with the head portion;
   a dispenser for dispensing the active ingredient from the reservoir via the head upon receipt of an activation signal;
   wherein the activation signal is triggered in response to information from the at least one sensor.

According to a sixth aspect of the present disclosure, there is provided a toothbrush comprising:
a body having a head portion and a handle portion;
an electric motor and/or vibrator for providing movement and/or rotation of the head of the toothbrush;
one or more sensors for detecting motion information of the toothbrush when in use;
a data logger for recording the detected motion information; and
a sound receiver for detecting changes in frequency of the electric motor and/or vibrator when the toothbrush is in contact with a tooth;
wherein the data logger is activated when one or more of the sensors or sound receiver detects a value which meets a predetermined threshold criterion.

### Brief Description of the Drawings

Embodiments of the invention and examples useful for understanding the invention will now be described by way of example with reference to the accompanying drawings in which:
Figure 1 shows an example of a smart toothbrush according to any one of the embodiments described herein;
Figure 2 shows a schematic diagram of a smart toothbrush according to any one of the embodiments described herein;
Figure 3 shows further schematic diagrams of a smart toothbrush according to any one of the embodiments described herein. Fig 3a shows an overview of the smart toothbrush including the location of a printed circuit board (PCB) within the body of the toothbrush, Fig 3b shows a top view of the PCB, and Fig 3c shows a bottom view of the PCB;
Figure 4 shows a schematic diagram of an example system capable of carrying out a method of monitoring toothbrushing;
Figure 5 shows an example of an external device such as a mobile device for use with the method of monitoring toothbrushing and/or for communication with any one of the toothbrushes described herein;
Figure 6 shows an example of an interactive display provided to the user on a mobile device;
Figure 7 shows a further example of an improved interactive display provided to the user on a mobile device;
Figure 8 shows an example of a further improved interactive display provided to the user on a mobile device;
Figure 9 shows a flow diagram depicting example steps in the method of monitoring toothbrushing;
Figure 10 shows shows a further example of an interactive display provided to the user on a mobile device;
Figure 11 shows shows a further example of an interactive display provided to the user on a mobile device;
Figure 12a shows shows a further example of an interactive display provided to the user on a mobile device before brushing;
Figure 12b shows an example of the same display viewed during or after brushing;
Figure 12c shows an example of the steps taken to provide feedback in the form of user displays to the user during and after brushing;
Figure 12d shows an example of the steps taken when the toothbrush is unable to connect with the external device;
Figure 12e shows connections between the external device and an external database;
Figure 13a shows a map of the journey taken by the toothbrush during a toothbrushing session using the recorded position and time information from the session;
Figure 13b shows the same data, broken down into each step of the journey;
Figure 13c is a key explaining which parts of the jaw, and in particular which tooth surfaces correspond to which of the numbers 1 to 10 used throughout this application to label the sections of the jaw corresponding to the 10 segments on the user display at the external device;
Figure 13d shows an example of a multivariate analysis used to match the detected position of the toothbrush by the one or more sensors to a relevant segment on the display shown to the user at the external device;
Figure 13e shows a map of an optimal path created using a travelling salesman machine learning algorithm;
Figure 14 shows example steps taken to track the journey (i.e. the path) taken by the toothbrush during a brushing session in order to provide feedback to the user;
Figure 15a, 15b, 15c, 15d, and 15e, each show respective embodiments of a smart toothbrush;
Figure 16 shows an example of the steps taken to track the journey (i.e. the path) taken by the toothbrush during a brushing session in order to provide dosing triggers to the user and/or to control dosing;
Figure 17 shows an example of a tracking system according to an embodiment of the present invention;
Figure 18 shows a further example of a tracking system according to an embodiment of the present invention;
Figure 19 shows an example processes followed by a smart brush with a magnetic sensor according to an embodiment of the present invention;
Figure 20 shows an example of data taken using the system of Figure 17;
Figures 21a and 21b show examples of data from calibration measurements carried out by a tracking system for recording the position of a toothbrush during toothbrushing;
Figures 22a and 22b show examples of further calibration to correct for arbitrary device orientation carried out by a tracking system for recording the position of a toothbrush during toothbrushing according to the present invention; and
Figures 23a and 23b show examples of an output from a sound receiver of a toothbrush according to or for use with the present invention.

### Detailed Description

### Toothbrush

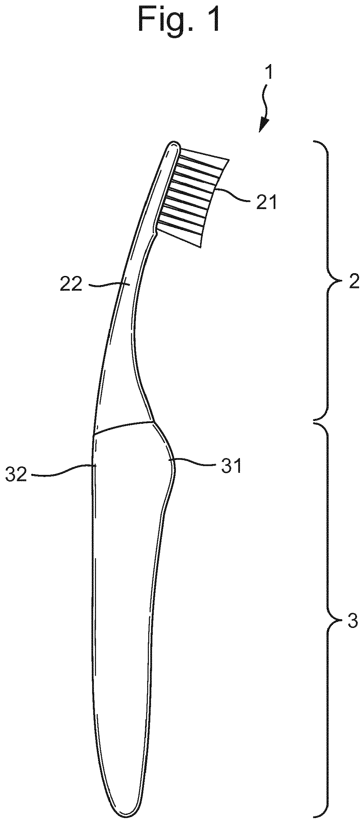

The present invention relates to a tracking system for recording the position of a toothbrush during toothbrushing, including a magnetic field generator and a smart toothbrush. A smart toothbrush useful for understanding the present invention is described below in relation to Figures 1 to 3. The smart toothbrush 1 comprises a toothbrush body, which is made up of a head 2 for contacting the teeth of a user and a handle 3 for contacting the hand of a user.

The head includes an array of bristles 21 which contact the teeth and gums of the user during toothbrushing in order to clean away plaque and debris. The array of bristles 21 is typically mounted upon a neck piece 22 which connects the head to the handle 3 of the toothbrush body.

The toothbrush body is hollow, with an outer shell defining one or more cavities within which smart components such as sensors, a power source, a display, and communication means are located. Examples of components located within the cavity include: a display 41; sensors 42 (including one or more of the following: an accelerometer, a gyroscope, and a magnetometer 42); a microphone 43; a power source (such as a rechargeable battery), a computing module including a processor and a communication module.

By incorporating a plurality of sensors in the same device, the smart toothbrush is able to determine a number of parameters including: orientation (via an accelerometer and or gyroscope); average sound-level (via a microphone); axis correlations (via a magnetometer); phase velocity (via the accelerometer).

The handle has a curved exterior with ergonomic curves, including an external convex portion 31 which acts as thumb rest but which also provides a corresponding cavity for larger components such as the display 41.

The computing module typically includes a memory and a processor, the processor of the computing module configured to perform one or more desired functions.

For example, in one or more embodiments, the processor is programmed to record the position of the toothbrush as detected by one or more of the sensors, at various points during a toothbrushing session. This recordal may take place at repeated time intervals throughout use of the toothbrush by the user and the processor may also be programmed to record the time (in the memory) at which each detected position was detected.

In some embodiments, the processor is also programmed to produce a map of the journey taken by the toothbrush during the toothbrushing session using the recorded position and time information.

The toothbrush includes an on/off switch (not shown), typically in the form of a capacitive switch. The processor can be programmed to initiate an auto switch-off after the timer detects a period of inactivity which extends beyond a given threshold. The prolonged period of inactivity may be measured in relation to a specific sensor, e.g. when no activity is detected by the accelerometer for the given threshold of time. In other cases, the period of inactivity may require that two or more sensors show no activity over the same time threshold. The timer (which may be a part of the computing module) may also include a feature for providing an indication to the user once a predetermined period of activity has been measured. For example, the indication may provide a signal to the user once a continuous recording of activity has been measured by one sensor or by two or more sensors simultaneously for a predetermined brushing time (a sensible value for which would be "2" mins).

The communication module may take the form of a wireless communication module, such as a Bluetooth module from which data can be transmitted and/or received. As well as providing a mechanism for communication with external components such as external sensors and/or computers (including mobile devices and smart mirrors) during normal use the communication module also provides an interface across which automatic downloads of data may be carried out following periods when the brush was not connected to the app.

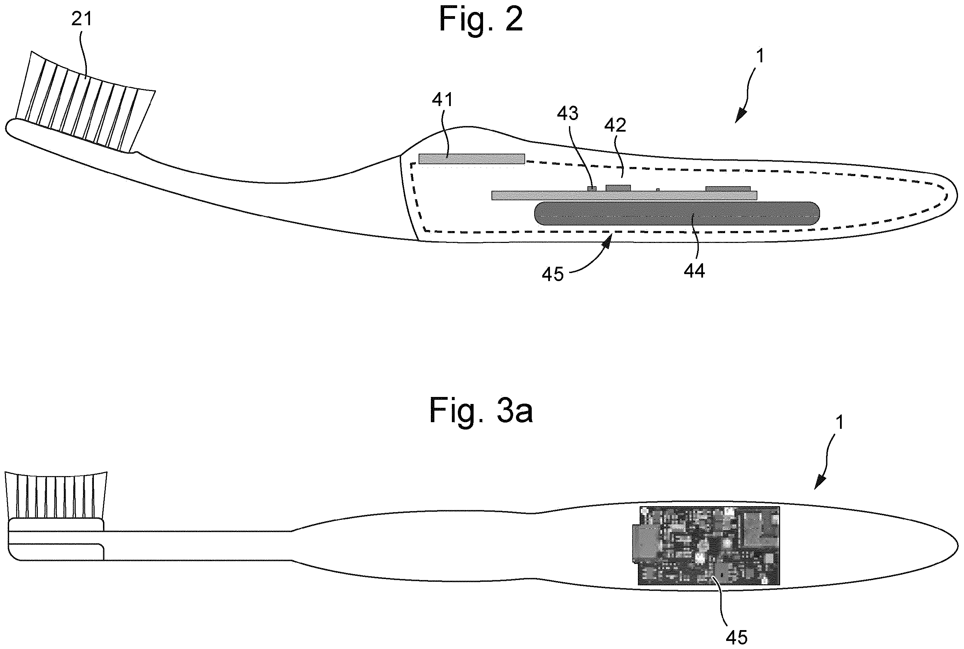

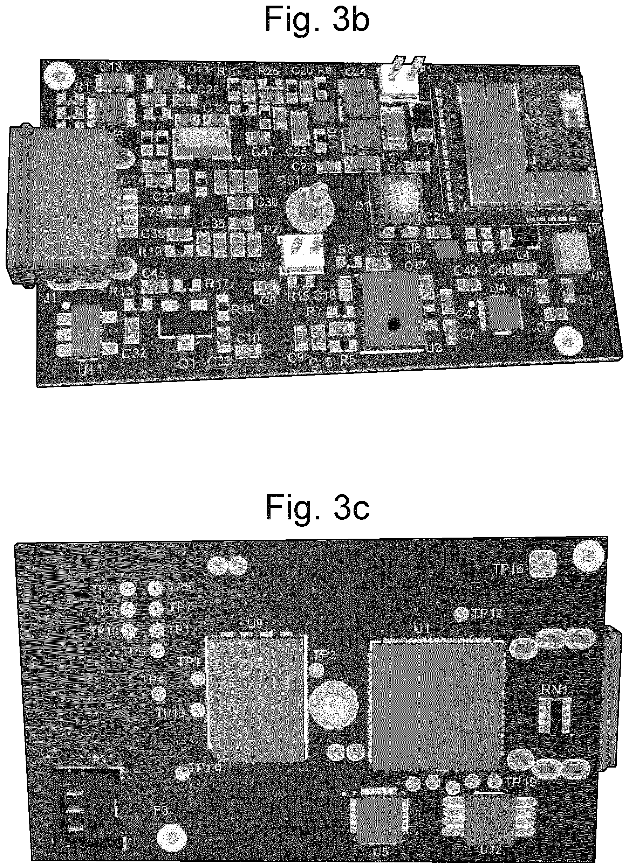

Electrical components may be mounted on a single PCB 45, an example of which is depicted in Figures 3a, 3b (top of PCB) and 3c (bottom of PCB), where the following reference numbers indicate the following components:
U3: microphone or sound receiver;
U7: communication module such as a Bluetooth module, specifically Bluetooth low energy (BTLE);
U2: temperature sensor and/or relative humidity sensor (i.e. a thermometer and/or hygrometer);
U12: temperature sensor (i.e. a thermometer);
D1: LED (light emitting diode). This may take the form of a tricolour LED and may be used as a warning indicator and/or as a status indicator. Warning indications may be related to brushing technique or may be related to toothbrush operation. For example, the LED may give a visual indication of when charging is taking place, or when the power source requires recharging;
P2: bend sensor connector, typically for measuring bend in the neck 22 of the smart toothbrush. The bend sensor may take the form of a piezoelectric bending sensor. In this way, it is possible to detect when the user is applying too much force to the teeth/gums via the head of the toothbrush. The processor may be configured to detect when a predetermined "bend threshold" is reached and to issue a warning to the user. The warning may take the form of a visual indication (e.g. lighting up or flashing of the LED) or an audio warning (via a speaker);
P1: speaker connector, for sending signals to the speaker, the speaker also being housed inside of the shell of the body of the toothbrush;
U4: magnetometer;
U5: combined accelerometer gyroscope, although these components could alternatively be provided separately;
U1: processor, more specifically a microprocessor;
U9: memory in the form of a flash drive. Combined with the processor, this memory forms the "computing module". The memory may function as a "data logger" which records information received from one or more of the sensors;
U11: voltage controller; and
U13: voltage controller.

### Dosing

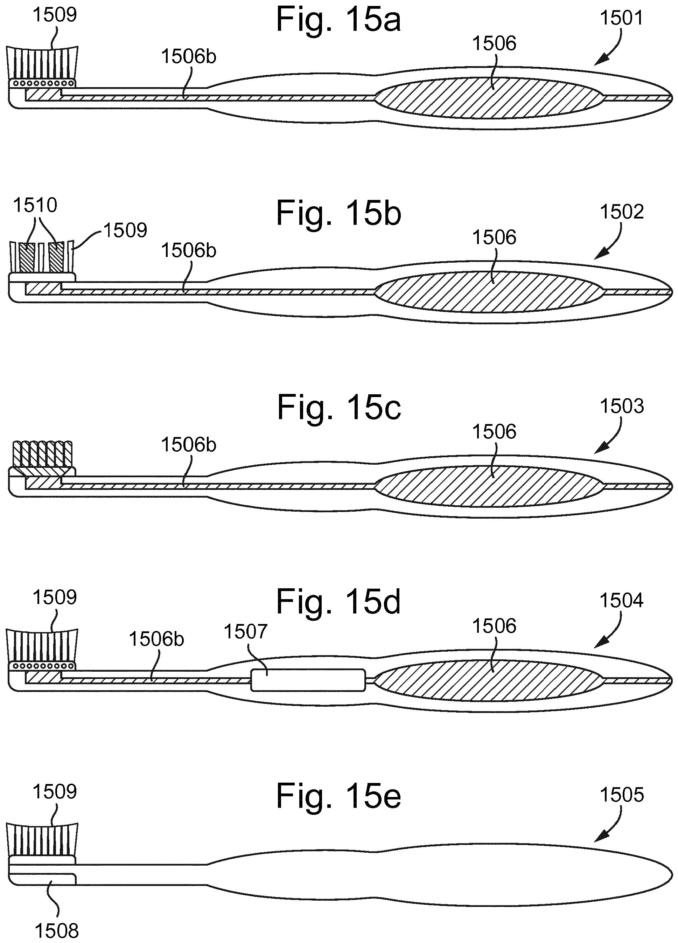

Figure 15a, 15b, 15c, 15d, and 15e, each show respective embodiments of a smart toothbrush, where the toothbrush includes one or more reservoirs for active ingredient(s). The reservoirs and associated dosing mechanisms described below in relation to Figures 15a-15e could each be applied to the smart toothbrush described above in relation to Figures 1-3.

The active ingredients are typically liquid based but could take other forms (e.g. gas, gel, foam or another gas/liquid mixture). Examples of active ingredients include a serum or a hardener. The active material may include anti-microbial properties, or cosmetic properties such as tooth whitening. In some embodiments, the active ingredient is a solid ingredient and a reservoir which is in fluid communication with the solid ingredient contains a solvent. When the solvent comes into contact with a portion of the solid ingredient, it will dissolve an amount of the solid ingredient, which can then be transported to the head of the toothbrush as the active ingredient to be dispensed. One advantage of such an embodiment is the fact that the frequency at which the solid ingredient needs to be replaced will be less than the frequency by which a liquid or gas ingredient would need to be replaced. If the solvent stored in the reservoir is water, it will be readily available to the user.

The reservoir and dosing mechanism enables adverse ingredients to be kept apart (e.g. an active component that would interact badly with toothpaste may only be dispensed once toothpaste has been washed away). It can also provide a mechanism for adding extra ingredients that will interact positively with other ingredients such as toothpaste.

As shown in Figures 15a to 15d, some embodiments comprise a reservoir 1506 for the active ingredient. The reservoir 1506 is in fluid communication with the head of the toothbrush via a fluid channel 1506b. In some embodiments, such as those of Figures 15a-c, the release of an active ingredient is achieved by a biomechanical pumping system, triggered by manual actuation by the user. For example, at least a portion of the reservoir may be formed of a flexible material which the user pushes upon or squeezes in order to release the active material. The toothbrush may be configured to issue an alert, usually an audio alert to indicate to the user that it is time for them to engage with the brush (e.g. to squeeze a portion of the brush) in order to release of the active ingredient.

In other embodiments, such as those shown in Figure 15d and 15e, the reservoir includes an electronically controlled actuator 1507, 1508 such as a pumping system or a valve, which is directly controlled by the computing module on the toothbrush. The pumping system could be one or more of the following: microfluidic; piezoelectric (similar to an inkjet printer).

In the embodiment of Figure 15d, the reservoir 1506 for the active ingredient and the electronic control (and pump) 1507 are located within the handle of the toothbrush. In the embodiment shown in Figure 15e, the electronics, pump and active ingredient are all located in a removable module 1508 located within the head of the body of the toothbrush. Advantageously, this removable module could be easily relocated in a new toothbrush once the bristles of the old toothbrush become worn.

In the embodiment of a smart toothbrush 1501 shown in Figure 15a, the active ingredient is delivered from the reservoir 1506 to user via apertures located at the base of the bristles.

In the embodiment of Figure 15b, the head of the toothbrush 1502 comprises bristles and one or more ingredient delivery structures 1510 located within the bristles. Rather than delivering the ingredient at the base of the bristles, the ingredient delivery structures 1510 transport the ingredient in a direction parallel to the longitudinal axis of the bristles before releasing the active ingredient. In this way, the user is able to more accurately target specific areas of the mouth for applying the dose of the active ingredient. The ingredient delivery structure(s) 1510 may take the form of hollow bristles, hollow blades or of micro pipes where the hollow blades or micro pipes may be formed from a material such as a rubber-based material which is different from the material of the bristles. In other embodiments, the ingredient delivery structure(s) may take the form of a sponge.

In the embodiment of Figure 15c, the head of the toothbrush 1503 does not contain any conventional bristles. Instead, it comprises only ingredient delivery structures 1510 such as hollow bristles and/or blades.

Whilst the heads of Figures 15a, 15b and 15c, and more particularly the bristle options, are shown in combination with a manually actuated toothbrush, they could equally be applied to the toothbrush bodies of Figures 15d and 15e. Similarly, although the "smart features" of the smart toothbrush are not shown in the schematic diagrams of Figures 15a-15e, each of these dosing toothbrushes will contain the smart features described elsewhere in this application (including the one or more sensors, the computing module etc.).

The reservoir and associated dosing mechanism enables adverse ingredients to be kept apart (e.g. an active component that would interact badly with toothpaste may only be dispensed once toothpaste has been washed away). It can also provide a mechanism for adding extra ingredients that will interact positively with other ingredients such as toothpaste.

As will be discussed in more detail below, the smart toothbrush may include an electric motor and/or a vibrator for providing movement and/or rotation of the head of the toothbrush.

In such embodiments, the sound receiver may be utilised to measure the frequency of the electric motor and/or vibrator. A program run by the processor records this frequency over time and detects changes in frequency of the electric motor and/or vibrator which occur when the toothbrush is in contact with a tooth. This detection of contact between the bristles of the head and the tooth can be used as a trigger for other events (e.g. dosing, measurement, activation of sensors).

### System

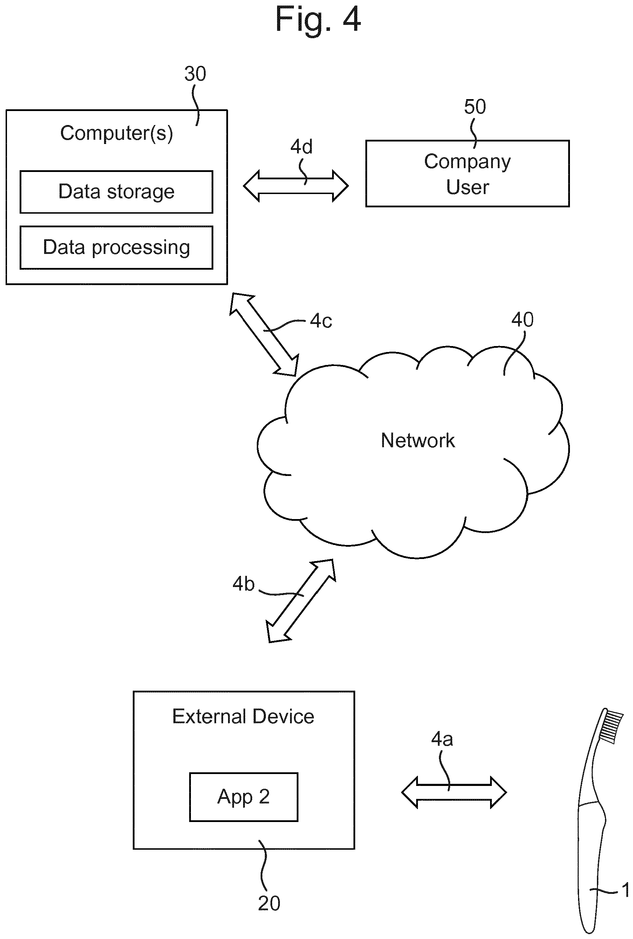

Figure 4 shows a schematic diagram of an example system capable for carrying out a method of monitoring toothbrushing;
The system comprises the toothbrush 1 and a mobile device 20 upon which an app 2 can be stored and run, the mobile device being communicably connected to the toothbrush. The mobile device can be connected to one or more computers via a network 40. Each of the mobile device and the toothbrush can communicate wirelessly with additional items in the system such as external sensors. For example, an external position sensor or a magnetic field generator. This could be a one-to-one communication channel such a Bluetooth or may be by providing access for the additional items to the network 40. According to some embodiments, the mobile device can be replaced with a different type of external computer such as a smart mirror or a wall mounted computer.

Wireless communications 4a between the toothbrush 1 and the mobile device 20 enable the flow of information therebetween. This flow of information could be a flow of data from the toothbrush to the app running on the mobile device such as raw data from one or more of the sensors on the toothbrush or processed data which has been recorded by one or more of the sensors on the toothbrush and then processed by the processor of the toothbrush before being forwarded via the communication module of the toothbrush to the mobile device.

Information passed between the communication module of the toothbrush and one or more interfaces of the mobile device may include toothbrush parameter updates.

Wireless communications 4b between the mobile device 20 and the network 40 may also include the flow of data. This is usually processed by either the toothbrush or the app 2 on the mobile device, but could also take the form of raw data. Brush parameter updates and software updates for the app 2 may also be sent from the network 40 to the mobile device 20.

The network may include the internet and/or one or more local area networks (LANs) or wide area networks (WANs).

One or more external computer(s) 30 such as servers may have connections 4c to the network in order to communicate with the mobile device 20 over the network 40. One or more of the external computer(s) includes data storage and data processing. The data stored and processed at the external computer(s) typically derives from a plurality of different users (via a plurality of different mobile devices and smart toothbrushes) and may include personal data, although this may be anonymous. The external computer(s) therefore provide a platform for data analytics taken from all or at least a proportion of the total number of users using their respective toothbrushes in their own homes. The communication channel between the company user 50 and the external computer(s) 30 therefore includes the flow of information from the external computer to the user of data mining insights from data analytics. It will also include the flow of settings and other information from the company user to the external computers. For example, software updates may originate from the company user 50 and reach the mobile device 20 via the external computer 30 and the network 40.

Data may be pushed to the server after a brushing session has finished.

External parties such as dentists may be provided with access to the data stored on the External computer 30 via the network 40. Alternatively, the user themselves may relay information from the toothbrush or from the mobile device to the dentist.

### Mobile Device

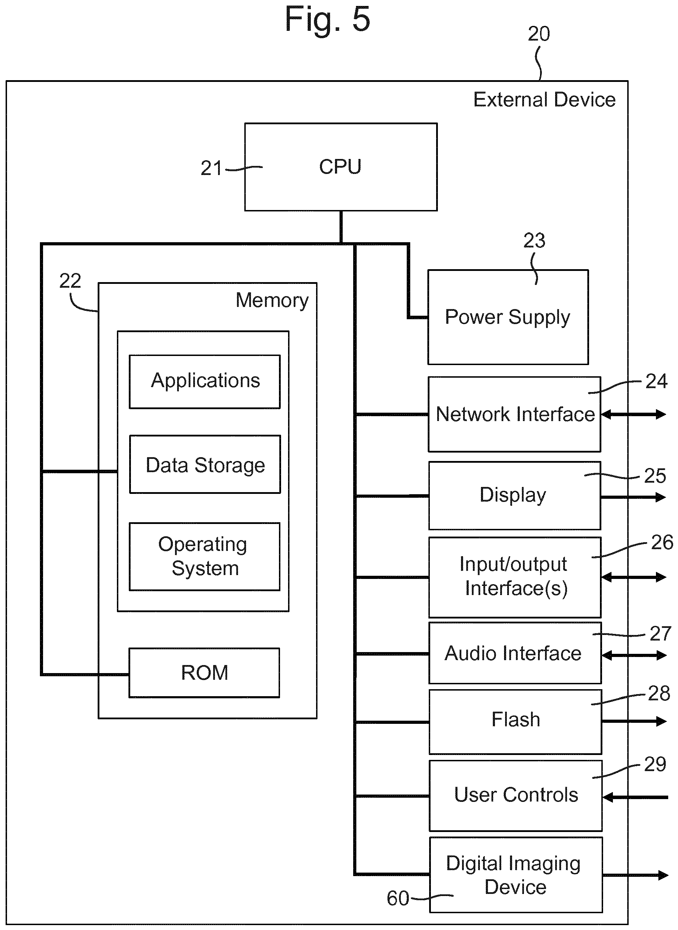

Figure 5 shows an illustrative embodiment of a mobile device. In particular, the mobile device is suitable for use with the method of monitoring toothbrushing described herein and also for communication with any one of the toothbrushes described herein. The mobile device may include all of the components shown but may contain more, or less. It should be understood that in embodiments where the mobile device is replaced by alternative external computers such as a smart mirror or a wall mounted computer, the alternative external computer will include the same features as those described below in relation to the mobile device.

The mobile device 20 typically includes a digital imaging device 60 such as a digital camera for recording digital photographs. These photographs may then be stored in a data storage section of the memory 22.

The mobile device 20 shown includes a central processing unit (CPU) 21 in communication with a memory 22 and various other components.

These other components of the mobile device 20 shown include a power supply 23, a network interface 24, a display 25, an input/output interface 26, an audio interface 27, a flash 28 and user controls 29.

The power supply 23 provides the power used by the mobile interface and may take the form of a rechargeable battery and/or external power source.

The network interface 24 provides a mechanism for the mobile device to communicate directly or indirectly with any compatible smart device and includes circuitry configured for use with one or more communication protocols and technologies including but not limited to: GPRS; GSM; TDMA; transmission control protocol/Internet protocol (TCP/IP); CDMA; WCDMA; Wi-Fi; 3G, 4G, Bluetooth or any other wireless communication protocols.

The display 25 may be an LCD (Liquid crystal display), a plasma display or any other suitable electronic display and may be touch sensitive in that it may include a screen configured to receive an input from a human digit or a stylus.

Input/output interface(s) 26 may include one or more ports for outputting information e.g. audio information via headphones, but may also be an input port configured to receive signals including remote control signals.

The audio interface 27 typically includes a speaker which enables the mobile device to output signals and a microphone which enables the mobile device to receive audio signals including voice control inputs for use in controlling applications.

The mobile device 20 shown includes a flash 28 which may be used in conjunction with the digital imaging device to illuminate an object of which a photograph is being taken.

User controls 29 may take the form of external buttons or slider which allow a user to control various functions of the mobile device.

An application saved on the device may be configured to interact with the various components of the device such that upon receiving an input from one or more of the user controls.

The computer program described herein may take the form of an application stored in the memory 22.

The mobile device may be connected to an external computer 30 either directly or via a network 40 so that computationally extensive calculations can be carried out by a computational module on the external computer, the external computer being more powerful than the mobile device and therefore capable of performing the calculations more quickly.

The mobile device 20 may also be configured to exchange information with other computers via the network 40.

### Application "App"

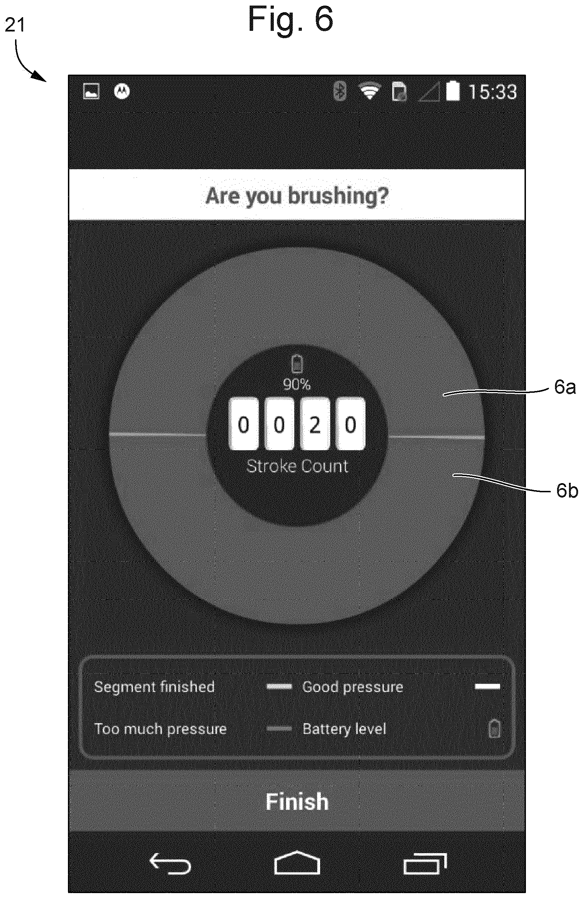

Figures 6 to 8 show examples of interactive displays provided to the user on the app 2 of the mobile device 20.

The first example, shown in Figure 6 is a graphical user interface (GUI) 21 presented to the user by the app 2, the GUI including two "segments". A first segment provides an indicator for brushing measured by the app as having taken place on the upper jaw and the second segment provides an indicator for brushing measured by the app as having taken place on the upper jaw lower jaw respectively.

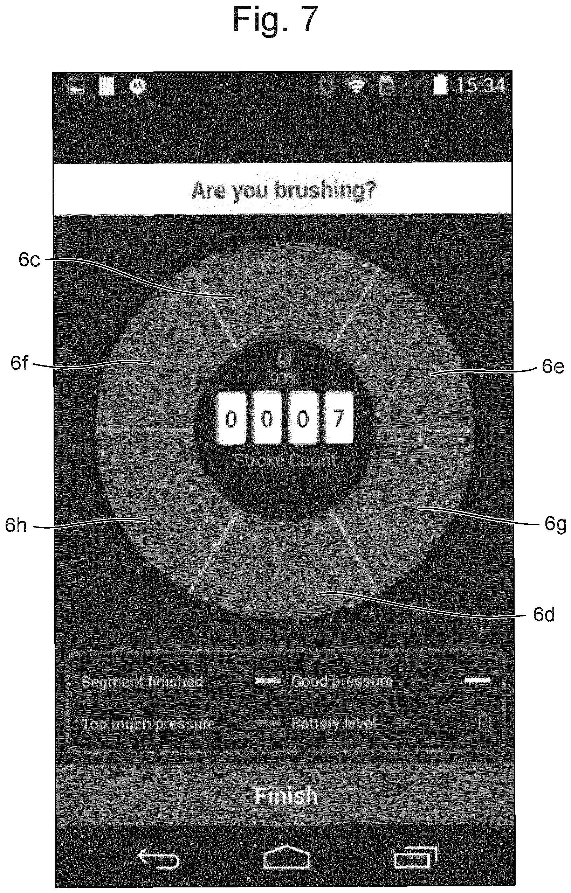

An improved example is shown in Figure 7, where 6 segments 6c, 6d, 6e, 6f, 6g and 6f correspond respectively to:
- the upper biting surface (6c)
- the lower biting surface (6d)
- the upper right outer and upper left inner surfaces (6e)
- the upper left outer and upper right inner surfaces (6f)
- the lower right outer and lower left inner surfaces (6g)
- the lower left outer and lower right inner surfaces (6h)

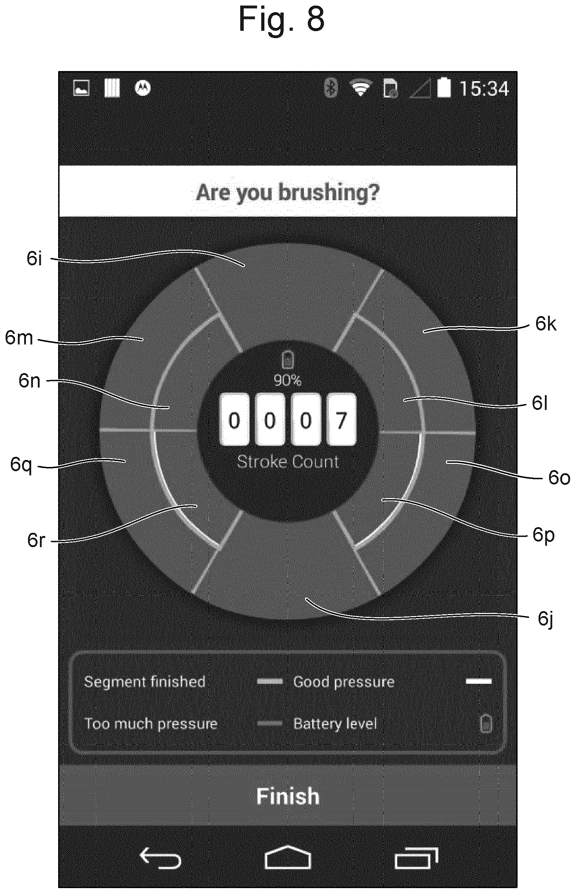

A further improved example is shown in Figure 8 where a total of 10 segments 6i, 6j, 6k, 6l, 6m, 6n, 6o, 6p, 6q and 6r correspond to:
- the upper biting surface (6i)
- the lower biting surface (6j)
- the upper right outer surface (6k)
- the upper right inner surfaces (6l)
- the upper left outer surface (6m)
- the upper left inner surface (6n)
- the lower right outer surface (6o)
- the lower right inner surface (6p)
- the lower left outer surface (6q)
- the lower left inner surfaces (6r)

The position of the segments mimics the position or the various surfaces around the mouth with the segment corresponding to the upper biting surface located at the upper portion of the GUI and the segment corresponding to the lower biting surface located at the lower portion of the GUI. Similarly segments for "left" surfaces are located on the left side of the GUI and segments for "right" surfaces are located at the right side of the GUI.

With the exception of the upper and lower biting surfaces, the segments for the remaining tooth surfaces are grouped in pairs. For example, the upper right outer surface and upper right inner surface are located adjacent one another as sub segments of a larger segment. This layout of segments has been specifically chosen to add to the ergonomics of the display on a mobile device. By refining the display of the information so that it is optimised for human use, the system provided is more user-friendly and intuitive. This is particularly important in the field of toothbrushing, as a requirement for a high level of attention to detail is likely to put off users.

It was found that the 6 segment system did not provide enough degrees of freedom to support a personalised model. That is to say, characteristics in an individual's brushing techniques were "lost" because location could only be assigned to one of 6 regions of the mouth. By splitting the jaws up into 10 segments, the detail that can be measured is significantly greater and allows for personalised models to be supported. The ability to construct personal models which map sensor data to location for a specific user underpins the ability to record measurements during "free brushing" by turning the recorded sensor data from the free brushing session into location information by accessing a lookup table which contains the calibration details for that specific user.

When detected sensor information detects that acceleration or pressure applied has exceeded a pre-set threshold value a warning may be displayed to the user to inform them that they are brushing too hard. This warning may take the form of a colour change on the visual display of the mobile device, particularly a colour change which overlays or highlights a graphic corresponding to the portion of the mouth in which brushing was taking place when the threshold was exceeded. The visual warning may or may not be accompanied by an audio warning and/or a displayed message such as "brushing too hard". Consumer studies have shown that audio warnings are particularly effective in the field of toothbrushing.

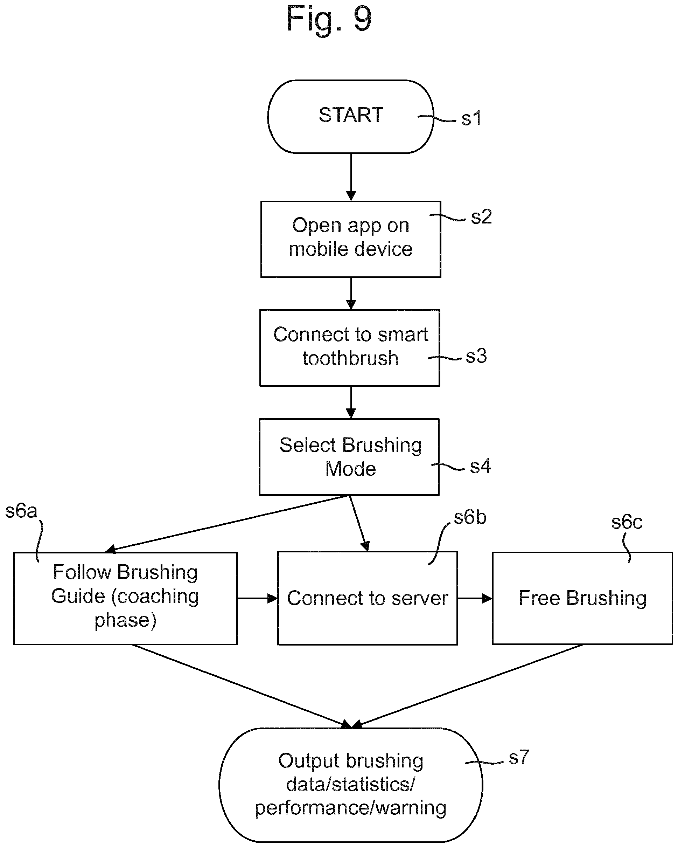

Figure 9 shows a high level flow diagram depicting example steps in the coaching phase of the method of monitoring toothbrushing.

Once the toothbrush and mobile device have been obtained, and the app for the mobile device downloaded, the user is ready to start (s1).

Initially, the user must open the app on the mobile device (s2) and ensure that the mobile device is connected to the toothbrush (s3) by Bluetooth or other wireless communication.

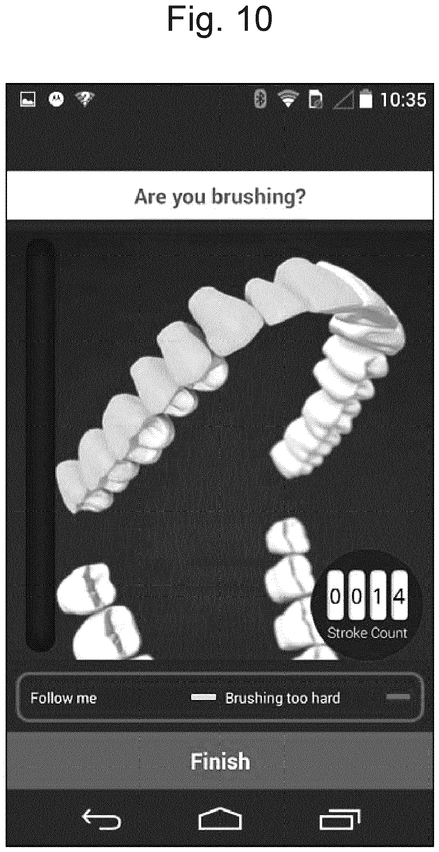

Figure 10 shows a further example of an interactive display provided to the user on a mobile device, particularly an image which may be presented to the user during a guided mode. The image shows a schematic of the jaws, with a section of teeth highlighted, the highlighted section corresponding to a segment of the 10 segment display.

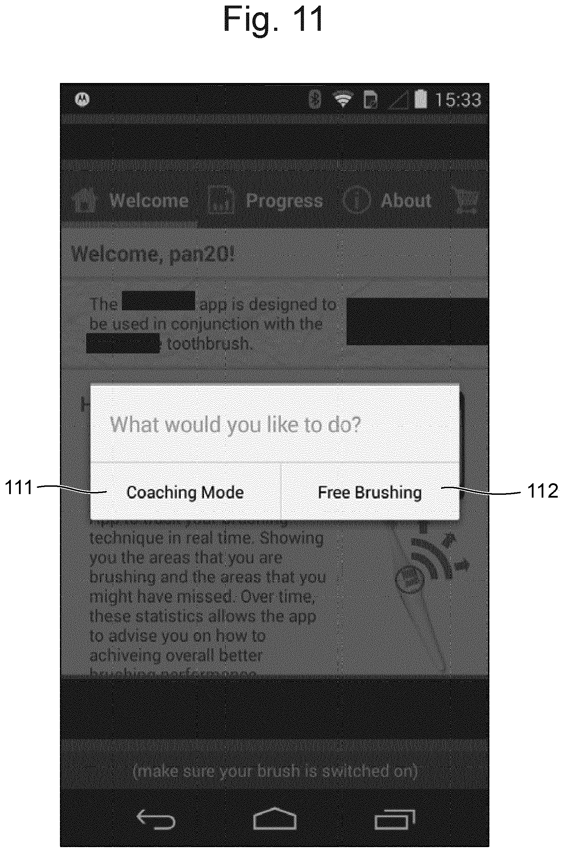

As is shown in Figure 11, an interactive display is provided to the user on a mobile device, giving them the option (s4) to select one of two brushing modes: a coaching mode (111) or free brushing mode (112).

Initially, the link to the free brushing function (s6c) of the app is non-actionable, appearing as greyed out text. Only once the coaching mode (s6a) has received and stored enough information to produce a personal model in the server (s6b) does the link for free brushing become actionable.

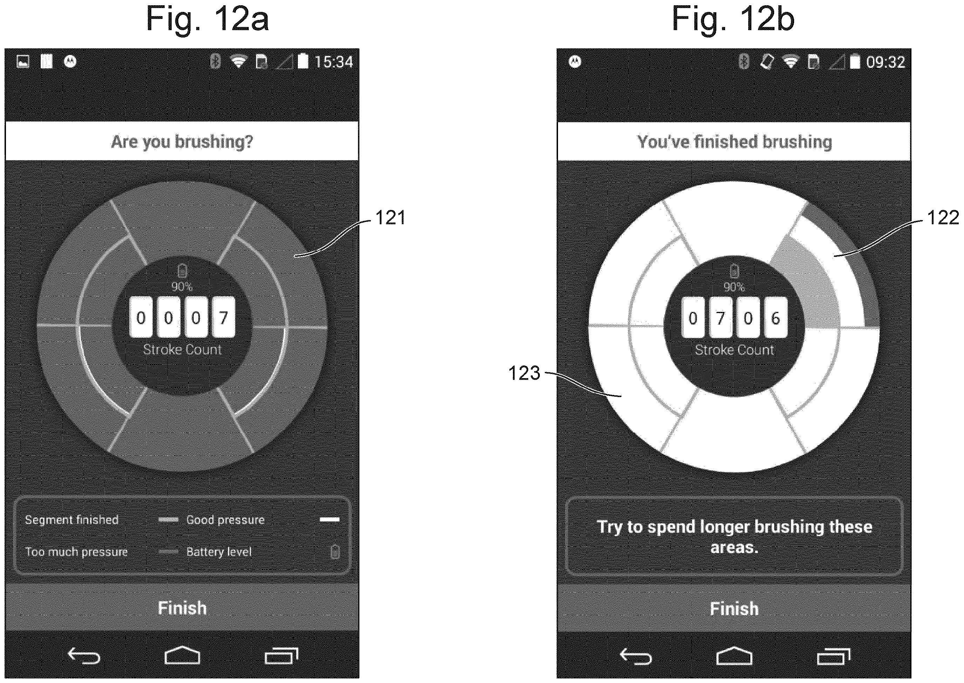

During toothbrushing (in either mode), data received by the one or more sensors of the toothbrush is processed by the computing module of the toothbrush and/or external processors on the mobile device or on an external computer. This is described in more detail below, with reference to Figures 12a-12c.

Depending upon the data received and the processing algorithms applied, various outputs can be produced and displayed to the user on the mobile device. For example, Figure 12a depicts a user interface displaying live feedback to the user at the beginning of a toothbrushing session, where all segments are empty 121. As brushing commences (Figure 12b), the sensor data is processed and the performance of the user displayed in the form of "filling up" segments 122; a full segment 123 indicating that a pre-set brushing threshold (e.g. number of brush strokes) has been met.

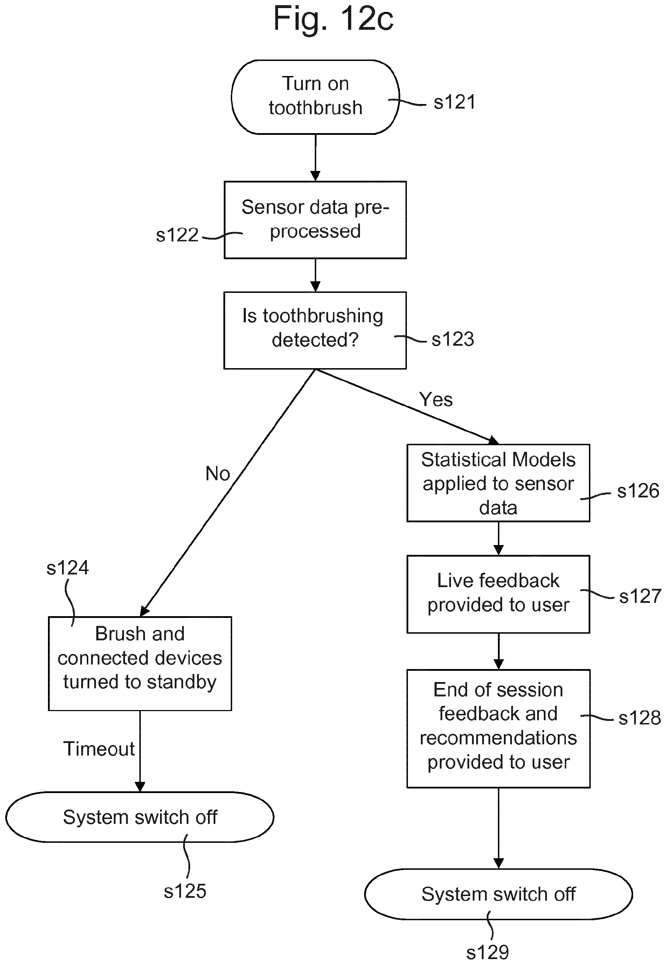

An example of the process followed by the toothbrush during toothbrushing is shown in Figure 12c. These steps will be carried out regardless of whether the coaching mode (i.e. guide mode) or the "free brushing" mode is selected. The difference between the two modes is that, in the coaching (guide) mode, the mobile device will provide a guide to the user for the user to follow during brushing. The way in which data is processed and provided to the user will remain the same.

In a first step (s121), the toothbrush is turned on. This may be via a switch or button controlled by the user or may be in response to detection of motion or touch via one or more of the sensors.

Once the toothbrush is on, data from the one or more sensors is pre-processed (s122) at the processor of the computing module. This pre-processed data may be stored in memory on the toothbrush itself or may be sent to the mobile device and/or another device such as a smart mirror or other computer.

The data from one or more of the sensors is used to determine whether or not toothbrushing has started. For example, in some embodiments, toothbrushing is detected when the toothbrush receives a combined detection of sound and motion via the microphone and accelerometer. Each of these values may have to exceed a pre-defined threshold in order to determine that toothbrushing has started. In other embodiments, a different combination of sensor triggers may be used to determine whether toothbrushing has started, such as a force sensor in combination with a motion sensor (e.g. the accelerometer).

Where no toothbrushing is detected, the smart toothbrush and any connected devices will be placed in a standby mode (s124). After a pre-defined amount of time ("timeout") the system, including the smart toothbrush will turn off (s125).

If toothbrushing is detected, statistical models will be applied to the pre-processed data (either at the computing module of the brush or at the mobile device). The statistical models compute one or more of the following parameters (s126):
- stroke count
- brushing intensity
- brushing duration
- which segment is being brushed
- time spent brushing one or more segments.

During brushing (as shown in Figure 12b), live feedback is presented to the user by the mobile device. This live feedback (s127) may include one or more of the following:
- stroke count
- warning message that brushing intensity has exceeded a pre-set threshold
- a guide to be followed (for the coaching mode), in the form of highlighted sections of the teeth, the highlighted section corresponding to a segment
- live feedback of segment coverage (free brushing mode)
- timer, usually monitoring the duration over which toothbrushing has taken place.

After a predetermined amount of time in which no activity has been measured by the sensors or in response to a manual switch, the toothbrush sends a signal to the mobile device to indicate that the toothbrushing session has ended, and the mobile device (or other device such as a screen or smart mirror) displays end of session feedback to the user and/or recommendations (s128).

Again, after a set timeout, the system will turn itself off (s129).

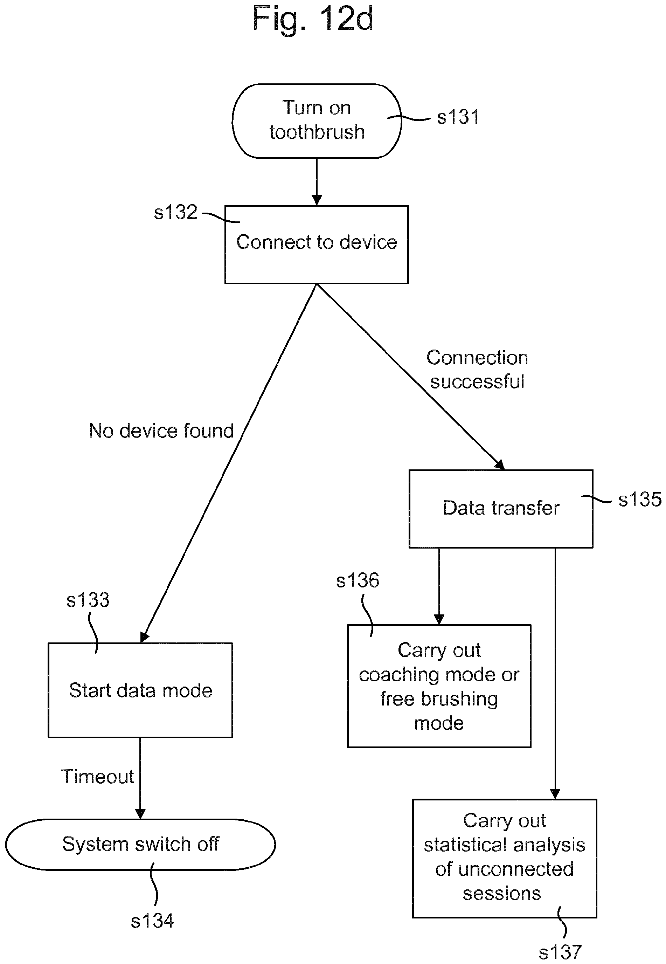

In some embodiments, the toothbrush is configured to operate in a standalone mode when no contact can be made with a mobile device (or other device). This is described in more detail in relation to Figure 12d below.

In an initial step, the toothbrush is turned on (s131), either by way of a user operated switch or button or in response to detection of motion or touch by one or more of the one or more sensors.

The toothbrush then attempts to connect (s132) with an external device such as a mobile device 20 or other device (e.g. smart mirror, wall mounted computer or smart cup). The connection is typically a wireless connection such as Bluetooth.

Where no external device is found by the toothbrush, the toothbrush starts operation in a "data mode" (s133). In this data mode, sensor data id pre-processed and saved in the memory of the computing module of the toothbrush. The processor of the toothbrush is programmed to provide basic feedback via visual or audio signals emitted from a light source or speaker on the toothbrush in response to the processor detecting that particular criteria have been met. For example, audio or visual signals may be emitted in response to:
- sensor data above a threshold indicating that brushing is taking place
- sensor data detecting that a pre-defined duration of brushing has been recorded; and/or
- sensor data detecting that brushing intensity has been recorded which is beyond a pre-set threshold.

After a predetermined amount of inactivity, the system will switch itself off (124).

If a successful connection has been achieved between the mobile device or other device, a data transfer will take place (s135). This will include synching data between the toothbrush and the device as well as sending sensor data from the toothbrush to the device. Where historic data has been stored on the brush but not transferred to the external device, this historic data will be transferred. The toothbrushing session will carry on as usual (s136) either in coaching mode or in freebrushing mode, as described in relation to Figure 12c steps s126-s129 above.

As an additional step (s137), statistical analysis will be carried out of the historical data corresponding to sessions carried out when the toothbrush and external device were unconnected.

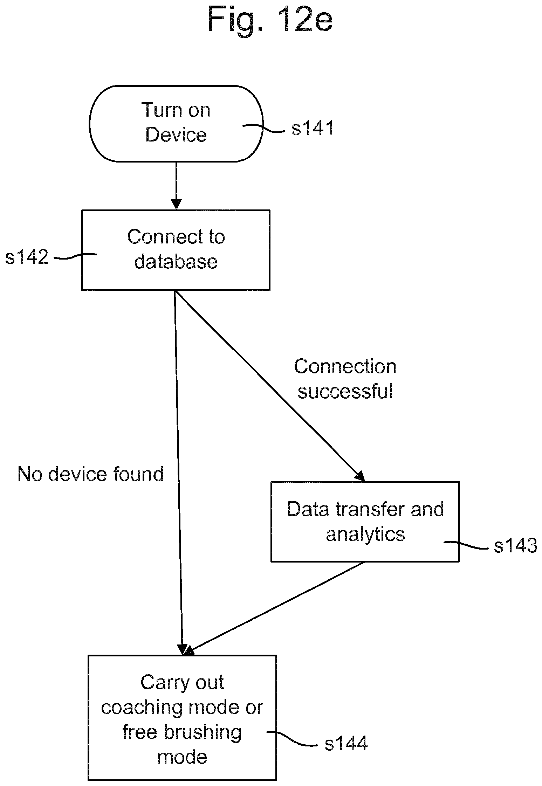

In some embodiments, the device (e.g. mobile device or otherwise) with which the toothbrush interacts is itself configured to connect with an external database such as an external computer or server 30. As shown in Figure 12e, the device should be switched on (s141) and will then attempt to form a connection to the database (s142). This connection may be via a network 40. If a connection between the device and the database is successful, the application (i.e. the program) running on the device will trigger data transfer (s143) between the device and the external computer at which the database is located, and may also trigger analytics to be carried out by the external computer. For example, upon achieving a successful connection, the following steps may be carried out:
- historic data can be downloaded from the device to the database
- data can be synchronised between the database and the device
- Statistical models run by the device on data from the toothbrush may be updated; and
- one or modes in which the application can run may be updated. For example, the external computer may, based upon information from the database, allow the application to unlock certain modes such as "free brushing".

### Journey

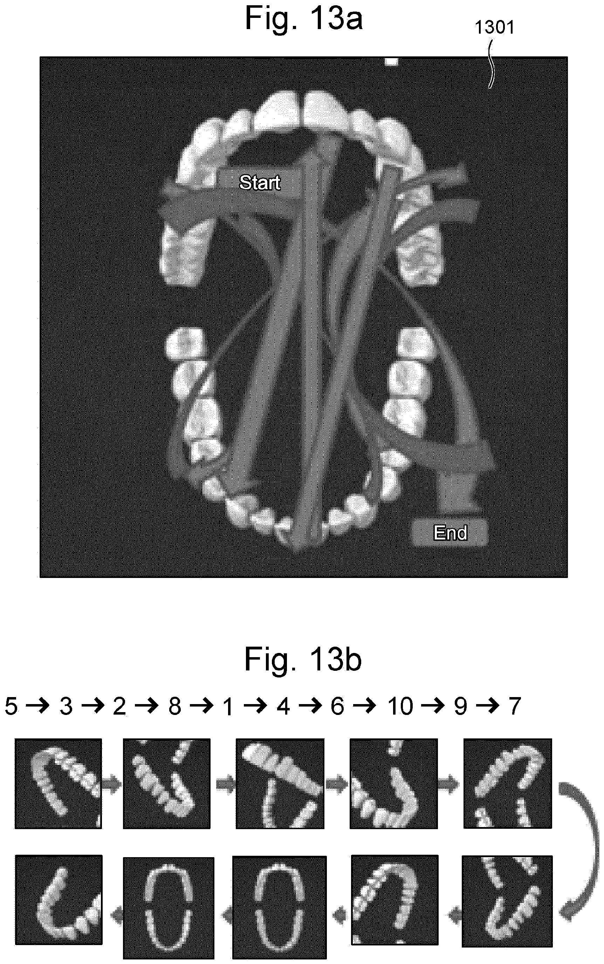

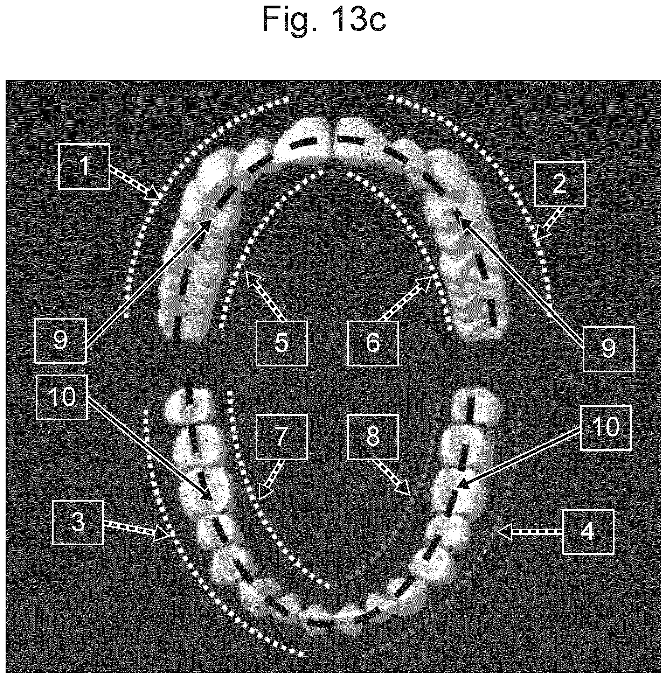

Figure 13a shows a map of the overall journey taken by the toothbrush during a toothbrushing session using the recorded position and time information from the session. Each step in the journey is set out in Figure 13b, where the numbers in the sequence 5>3>2>8>1>4>6>10>9>7 correspond to particular parts of the jaw, as shown in Figure 13c. Each of these numbered parts of the jaw correspond to a respective one of the 10 segments 121, 122, 123 displayed to the user by the mobile device during brushing as depicted in Figures 12a and 12b.

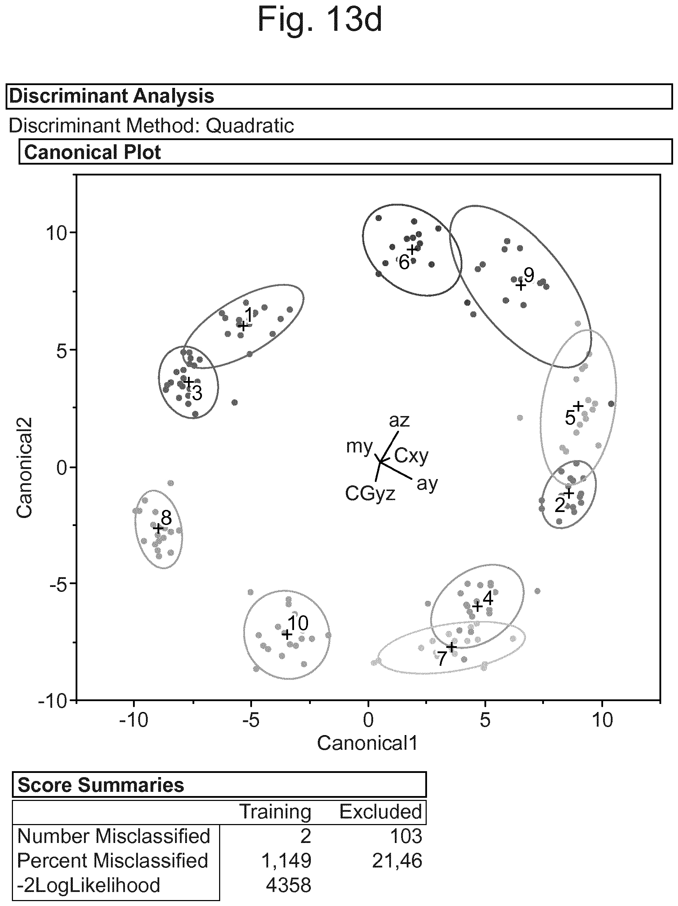

Figure 13d shows an example of a multivariate analysis used to match the detected position of the toothbrush by the one or more sensors to a relevant segment on the display shown to the user at the external device. In this example, the clusters (corresponding to the 10 segments) are shown in a feature space (projected onto a suitable 2-D subspace). Quadratic discriminant analysis was used to estimate the normal approximation (circles around each cluster of points) for each segment cluster.

The journey is produced by a smart toothbrush which includes at least a toothbrush body, comprising a head 2 for brushing and a handle 3 as well as at least one sensor for detecting the position of the toothbrush in the mouth at various points during a toothbrushing session.

The smart toothbrush further includes a timer for recording the time at which each detected position occurs; and a computing module with a memory, the computing module configured to (i.e. programmed to) record the detected position at various points during a toothbrushing session along with recording the time at which each detected position was detected. From these recorded points, the processor of the computing module produces time series data which corresponds to a map of the journey taken by the toothbrush around the jaw during the toothbrushing session.

It will be appreciated that other methods of measuring or determining a path taken by a toothbrush around the jaw during a toothbrushing session are also possible. What is important is the path, rather than the method and sensors by which the path is determined and/or measured.

Typically, the computing module is programmed to use a machine learning algorithm, e.g. solving a travelling salesman problem, to process the recorded position and time information and produce a map of an optimal path to be taken by the toothbrush during the toothbrushing session.

One or more journeys made by the user's toothbrush may be recorded at the database of the external computer 30. Newly recorded journeys may be checked with previously recorded journeys. If a deviation from a previously made (and stored) journey is detected, a processor at the mobile device may trigger a warning signal to indicate to the user that unusual behaviour has been detected. This warning may take the form of a message displayed on the screen of the mobile device and may or may not be accompanied by an audio signal. The amount of deviation required before the warning signal will be triggered is pre-set, either as a standard pre-defined value built into the software run on the device, or by a pre-defined amount which is input by the user or a health professional.

In analysing the time series data that corresponds to the journey taken (i.e. the path taken) by the user around the jaw, a *distance* can be calculated between these and other paths to show how similar / different they are to each other. The distance may the geometric distance, or may, for example, be a measure of distance between symbol strings associated with the journeys, for example the Levenshtein distance. Using the distance enables clustering to take place of brushing paths, to see how similar one brushing path is to another.

For example, the distance metrics can be used to determine how close a recorded brushing journey is to that recommended by a dentist as well as to determine whether the user is consistent in their brushing habits. Typically, a user will be consistent in their brushing habits, so a deviation from the "regular" already recorded journeys can be an early indicator of a problem such as tooth sensitivity or gum disease. By triggering a warning upon such a deviation, the user can be made aware of potential problems before they would have been otherwise.

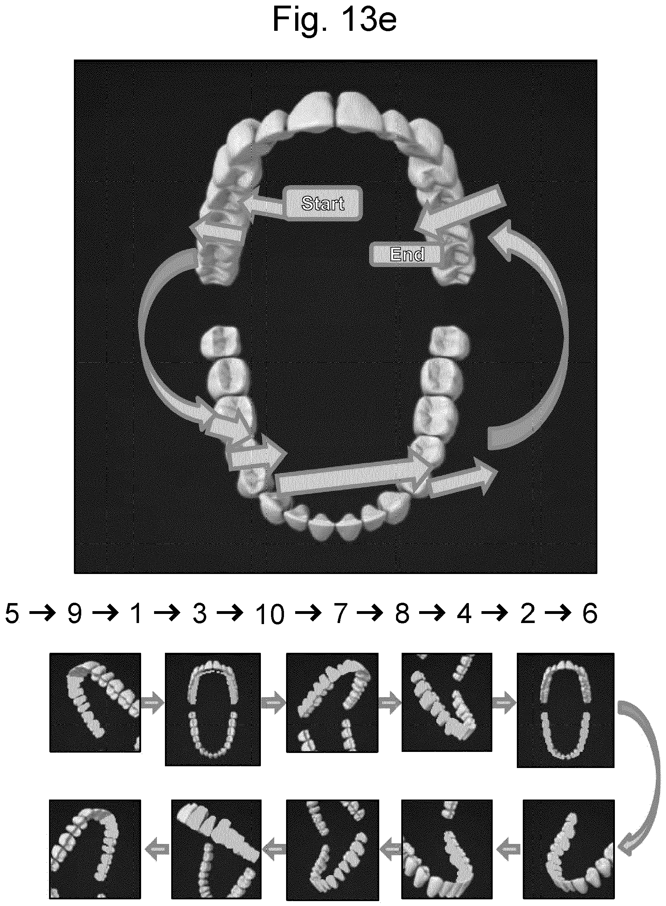

Figure 13e shows a map of an optimal path created using a travelling salesman machine learning algorithm. A more efficient brushing technique can be implemented by training the user to follow this calculated optimised journey. The path followed during the journey has been optimised by minimising an appropriate cost function related to the transition probabilities: the less likely a transition the higher is the associated cost. The transition probabilities are a function of spatial distance and biomechanical constraints such as dexterity. In this case, it is found that brushing the regions in the order of 5>9>1>3>10>7>8>4>2>6 is more efficient than in the path taken by the user in Figure 13a.

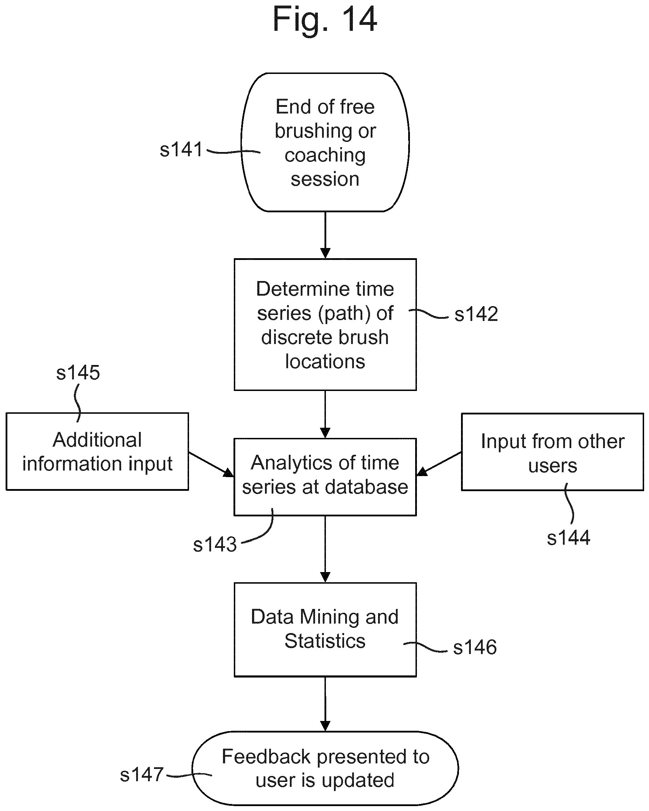

The steps carried out in analysing the data from the smart toothbrush and providing related feedback to the user are described in more detail below with respect to Figure 14.

Once the toothbrushing session (free brushing or coached) has ended (s141), the position data from the one or more sensors and the respective time information from the data are used to produce a time series (i.e. a path or journey) for that toothbrushing session (s142).

The time series is sent from the device of the user to a database, typically on an external computer, where it is analysed (s143) and may be compared with previous journeys by the same user or other users. The external computer may be accessed by the user over the network 40. The database may also receive data input from other users over the network (s144) thereby enabling analytics for an entire population of users rather than just a single user. Additional inputs may also be received at the database via the network. This may include information entered by the user themselves such as whether they are left or right handed , whether they have any problem areas in the mouth that they are aware of, or extra information they may have received from their dentist such as the need to focus more on a particular area of the mouth during toothbrushing.

Once the data has been accumulated at the database, data mining and statistical analysis (s146) of the data may be used to carry out one or more particular functions. Examples of such functions include:
- The average path calculated for a given user may be updated based upon the path of the most recently recorded journey
- transition probabilities may be calculated, the transition probabilities being the probability to go to state Y, given that the previous state was X
- Markov models may be applied (which use the transition probabilities)
- optimal paths may be calculated
- a change in journey or anomaly in a journey may be detected.

The above steps may be carried out at the database regardless of whether the device is still "online" and therefore connected to the database over the network.

If the device is online, the feedback that is presented to the user at their device 20 is updated based upon the results of the preceding analysis and statistics (s147). Feedback updates may include one or more of the following:
- Providing an optimal path (such as that of Figure 13e) which may be more efficient and/or may avoid difficult transitions
- Issuing a warning to notify the user of a detected change. The warning may flag up the potential problem area identified to the user, for example by highlighting the region of the jaw corresponding to the relevant "segment" on a picture of the jaw
- suggesting a different start point, for example purposefully starting with a region of the jaw that, according to the statistical outputs, the user tends to neglect; and
- recommending products for the user based upon observed behaviours (e.g. sensitive teeth products).

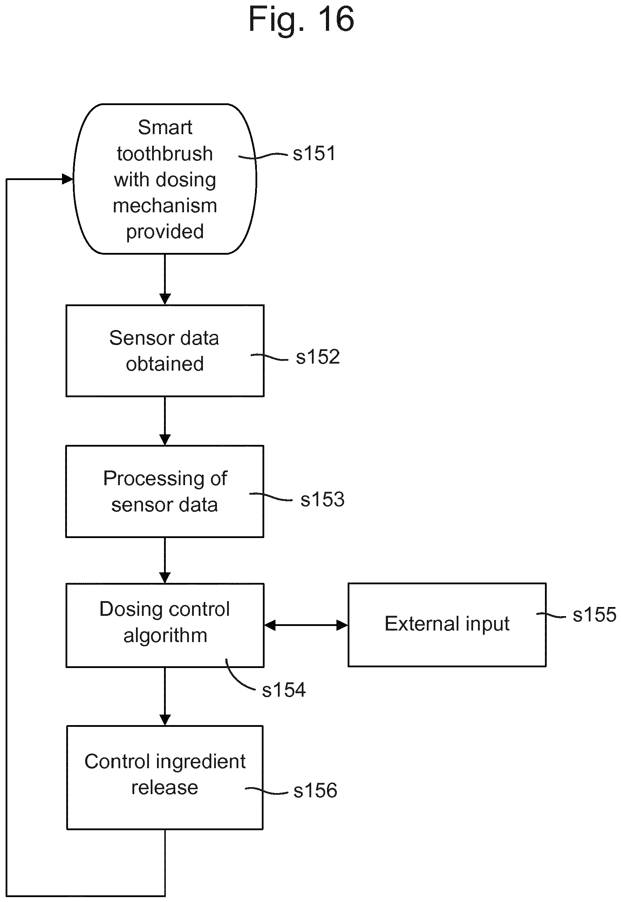

The ability to calculate and present a journey to the user and the ability to analyse time series data from a user may be used in conjunction with the dosing mechanisms previously described in relation to Figures 15a-e. This is described in more detail below in relation to Figure 16.

Firstly, a smart toothbrush with a dosing mechanism such as any of those shown in Figures 15a-e is provided (s151) and turned on.

During toothbrushing, data is obtained from the one or more sensors (s153). This data is processed (s153), either in the internal processor of the computing module of the toothbrush, or at the mobile device. This processing includes computing the location of the toothbrush in real time. In other embodiments, features of the teeth may be monitored in real time such as plaque strength or tooth whiteness, both of which could be detected by a camera on the toothbrush.

A dosing control algorithm is applied (s154) to the processed data, the algorithm including set conditions which have to be met for dosing to take place. These conditions may be set by the user via the device (e.g. mobile device) before brushing takes place. The dosing algorithm tracks the position of the toothbrush within the jaw and detects when a condition is met. For example, when the location data from the sensors shows that the head of the toothbrush is in a particular location, which may correspond to a particular one of the 10 segments. Further sensors that may be used to provide data suitable for generating a trigger or activation signal for dispensing one or more active ingredients from one or more reservoirs may include any of the following types: (i) light- or camera-based sensors for detecting live and dead plaque (e.g. stained), tooth staining, tooth colour, fluorescence, implants, tooth filling, gloss, shine, blood, or toothpaste presence; (ii) ion-selective electrodes for fluoride, zinc (Zn), calcium (Ca), or tin (Sn); (iii) sensors for dissolved gases; (iv) gas sensors for odours; (v) a voltmeter for Redox potential; (vi) a sensor for hydrogen peroxide (H₂O₂); (vii) a viscosity sensor; (viii) a hormone sensor; (ix) a temperature sensor; (x) a conductivity sensor. Thereby, dosing or dispensing of one or more active ingredients from the one or reservoirs may be performed in response to a detected level of one or more of the above sensed parameters or combinations thereof listed in items (i) to (x) above.

The dosing mechanism may be primed ready to dose ahead of reaching the location at which dosing is to take place, in a predictive step. This would allow an increase in the effective dosing time or amount in the required location.

The dosing control algorithm may also update a log of dosage history; logging the positions and times at which dosing occurred along the path of a particular journey. This data may later be fed back to a database on the external computer 30.

External input may be provided (s155) to the dosing algorithm. In some embodiments, this external input will include one or more of:
- an optimal path to be followed during the journey
- recommended dosing combinations or locations
- specifics of the product which forms the active ingredient to be dosed; and
- up-to-date dosing instructions from the product manufacturer.

When the dosing control algorithm detects that a condition for dosing has been met, the processor on the toothbrush will control release (s156) of the ingredient by initiating a trigger for the dosage to occur. For toothbrushes with a biomechanical dosing mechanism, this trigger could be in the form of a warning provided to the user (e.g. audio or visual signal) to alert the user that they need to actuate the biomechanical mechanism themselves. In other embodiments, where the toothbrush includes an electronically controlled pump or valve, the trigger may simply be an electrical signal which actuates the pump or valve to eject the required dosage from the reservoir via the head of the brush.

When and/or what is dosed by the toothbrush may be influenced or driven by data that is provided to the toothbrush from an outside source rather than data that is measured by sensors in the toothbrush. For example, advice from a dentist, or user preferences (e.g. flavour of dose) could be used as data to influence and/drive dosing. Furthermore, data from other diagnostic sensors, which may be internal or external to the toothbrush, may be used to provide data that can be used to influence or drive dosing.

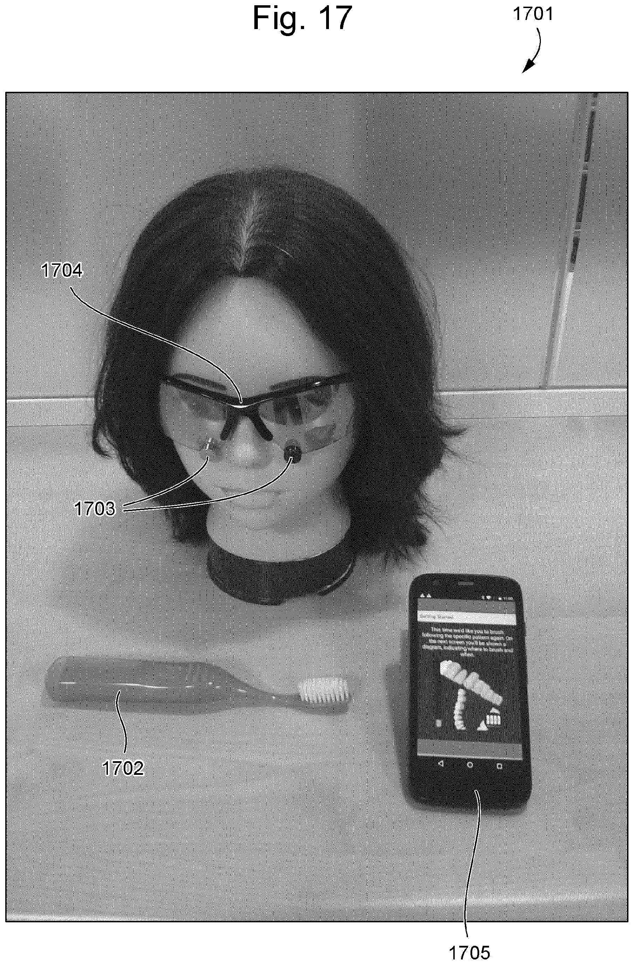

Examples of a tracking system according to the present invention are described below with reference to Figures 17 to 18.

Figure 17 shows an example of a tracking system for recording the position of a toothbrush during toothbrushing according to an embodiment of the present invention.

The tracking system 1701 includes a smart toothbrush 1702 which may contain one or more of the features set out above, in particular those features set out in relation to the embodiments shown in Figures 1-3 and also Figures 15a-e.

In particular, the toothbrush includes a head portion 2 and a handle portion 3. The body of the toothbrush comprises one or more sensors, including at least an orientation sensor such as an accelerometer or a gyroscope.

In addition, the smart toothbrush 1702 of this embodiment includes a sensor for detecting contact between the toothbrush and the jaw of a user. This may, for example take the form of a sound sensor.

The system 1701 includes one or more magnetic field generators and the smart toothbrush also includes a magnetic sensor for detecting location within a magnetic field. The magnetic sensor detects the absolute position of the toothbrush within the field created by the magnetic field generator. In this embodiment, the magnetic field generator 1703 takes the form of a plurality of magnets located on a pair of glasses 1704. By incorporating the magnetic field generator into glasses and ensuring that all communication between the different elements within the system are wireless, the system provided is suitable for home use. This is in contrast to prior systems such as that of US 2012/0310593, which require specialist, cumbersome equipment and are therefore only suitable for use in combination with a visit to a health professional or dentist.

The system further comprises an external device 1705 which in this embodiment takes the form of a mobile device containing the application described in relation to Figure 9. The toothbrush 1702 interacts with the mobile device 1705 in the same way as described in relation to previous embodiments, only with the added benefit of a magnetic sensor output which is recorded on the toothbrush by the magnetic sensor and can be processed either on the toothbrush itself, or sent to the mobile device for processing in order to give an output of the location of the toothbrush.

Unlike previous embodiments, the presence of the magnetic field generator and magnetic field sensor enables an actual position of the toothbrush to be measured, rather than relying upon a determination of the likely position based on movement and orientation sensors such as accelerometers. In this way, it is possible to provide the user with much more accurate information about where the toothbrush is at any specific time.

The magnetic systems described herein can be used in two different ways. In the first of the two ways, toothbrushing always occurs in the presence of a magnetic field, the magnetic field providing a mechanism for increasing the resolution of the system. In such situations, the magnetic field measurements also remove the need for a coaching phase since the actual position of the toothbrush can be measured in real time during free brushing.

In principle, the magnetic system can provide a resolution great enough to provide tooth-by-tooth tracking of the toothbrush. However, in reality, the size of the toothbrush head is often larger than the size of one tooth and therefore limits the resolution of measurements that can be obtained.

It is also envisaged that the system could be utilised in a second way in which the magnetic field is used in the coaching phase to provide a link between real measurements which can be detected by the magnetic sensors and extrapolated measurements that are made by evaluating data taken from the accelerometer data.

Values of M (Mₓ, M_{y}, M_{z}) are measured at each tooth and used to build lookup table.

Alternatively, measurements may be taken at only a subset of teeth (e.g., one front, one back left, one back right) + use model of jaw (see WO2008116743A1) and model of field to extrapolate calibration values for other teeth.

Since measurements of the absolute position of an object within a magnetic field require x, y and z components to be measured, the measurements and calculation to determine the absolute position can be complex. For this reason, the measurements for position of the toothbrush within the magnetic field are only recorded once contact between the jaw and the toothbrush head is detected. In this way, the calculations that need to be carried out to determine position from the magnetic data will be simplified because the toothbrush head must lie in a position along the line of the jaw. A degree of freedom has therefore been removed from the calculation. It has been found that removal of this degree of freedom can be important when relying on only movement and orientation sensors such as accelerometers, even when supplemented by low resolution magnetic positioning systems, in that relying on time-dependent accelerometer data may result in a number of possible brush positions or aliases consistent with the acquired data. Using the jaw contact data may readily distinguish between the aliases and the true brush position even when using a magnetic field generator and magnetic sensor of relatively low complexity and low precision. Use of a sound sensor for detecting contact between the toothbrush and the jaw has been found to be a particularly simple and effective way of removing the requisite degree of freedom.

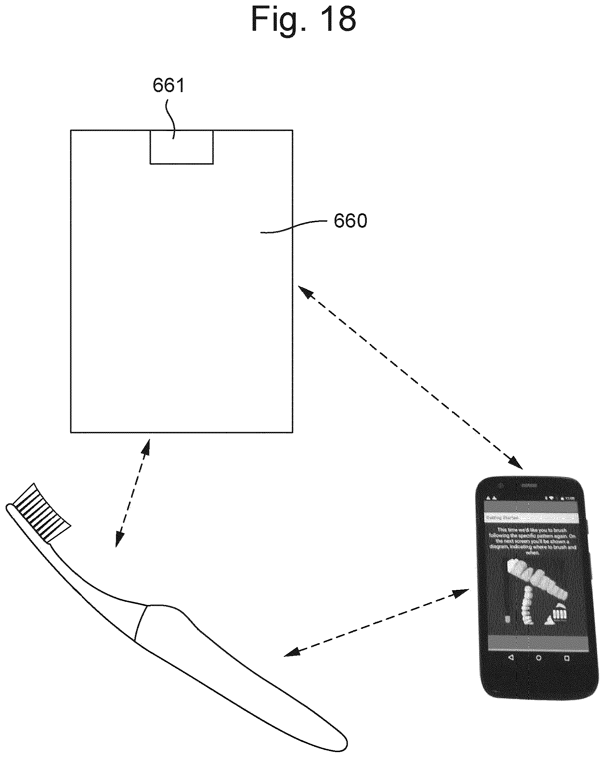

Figure 18 shows a further example of a tracking system according to an embodiment of the present invention. This embodiment differs from that of Figure 17 only in that the external device is in the form of a mirror 660 and the magnetic field generator 116 is mounted on or integral with the mirror 660.

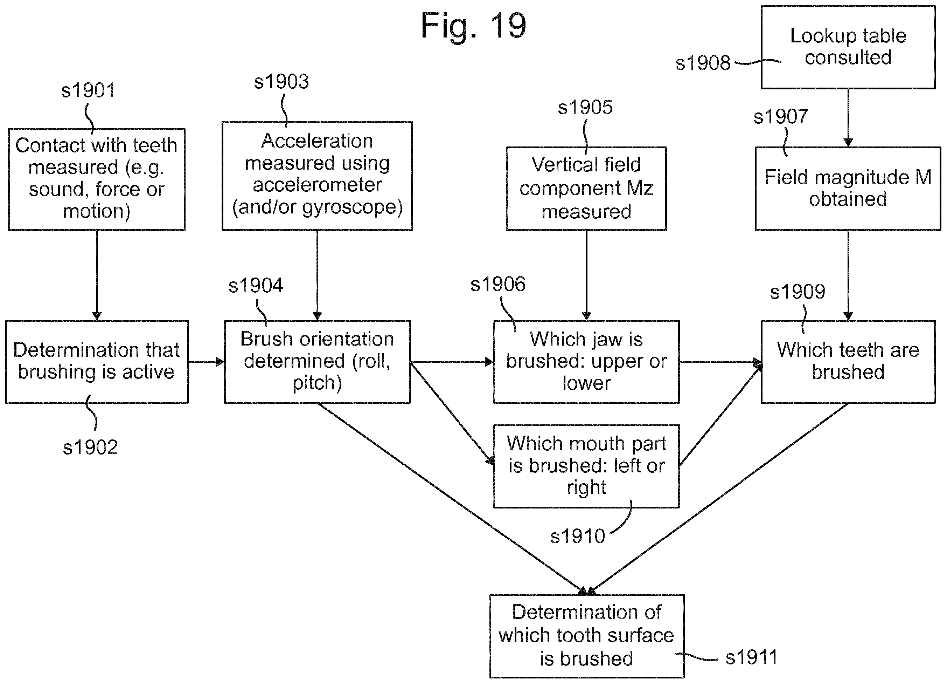

Figure 19 illustrates how the magnetic measurements and other sensor measurements taken are processed in order to arrive at a measurement of which tooth surface is being brushed.

One or more of the sensors on the toothbrush is used to detect contact between the head of the toothbrush and the teeth in a user's jaw (s1901). This enables a determination to be made that brushing is active (s1902). Measurements recorded by particular sensors such as the accelerometer or gyroscope (s1903) can be used to determine the orientation of the brush (1904), including its pitch and/or its roll.

The magnetic sensor on the toothbrush is used to measure the x, y, and z components of the magnetic field. The measurement of the z component (M_{z}, the vertical field component) (s1905) is used to determine whether it is the upper jaw or lower jaw which is being brushed (s1906) and also whether the left or right side of the mouth is being brushed (s1910). The absolute magnitude M of the magnetic field may be obtained (s1907) with or without consultation from a lookup table (s1908) and enables determination of the position of the toothbrush and therefore, in combination with the determination of which mouth part is being brushed (s1910) and which jaw is being brushed (s1905), allows the processor to calculate which tooth or teeth are being brushed.

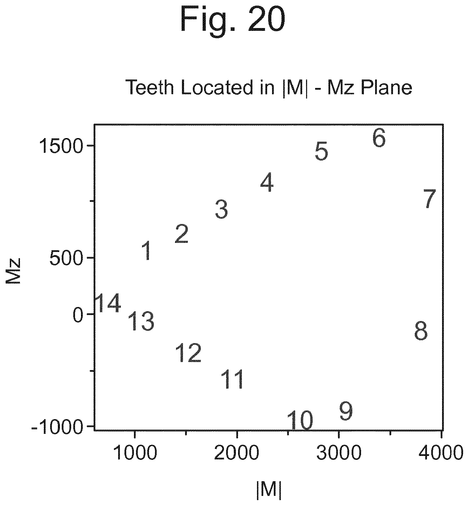

This information can be combined with the determination of the orientation of the brush (s1904) in order to determine which surface of the tooth or teeth is being brushed. Figure 20 shows an example of magnetic sensor data taken using the system of Figure 17. The magnetic sensor (located within the toothbrush of the present invention) was moved along an artificial jaw in presence of the field generated by the 2 magnets. Each number on the plot corresponds to a particular tooth; number 1 corresponding to the back molar left, going around clockwise to number 14 which corresponds to the back molar right. The points for the different teeth are well separated, showing that each tooth has a unique M_{z} and IMI combination.

### Calibration of magnetic fields

An initial calibration is typically carried out to calibrate the magnetic readings. Magnetic readings are taken in at least three locations along the jaw.

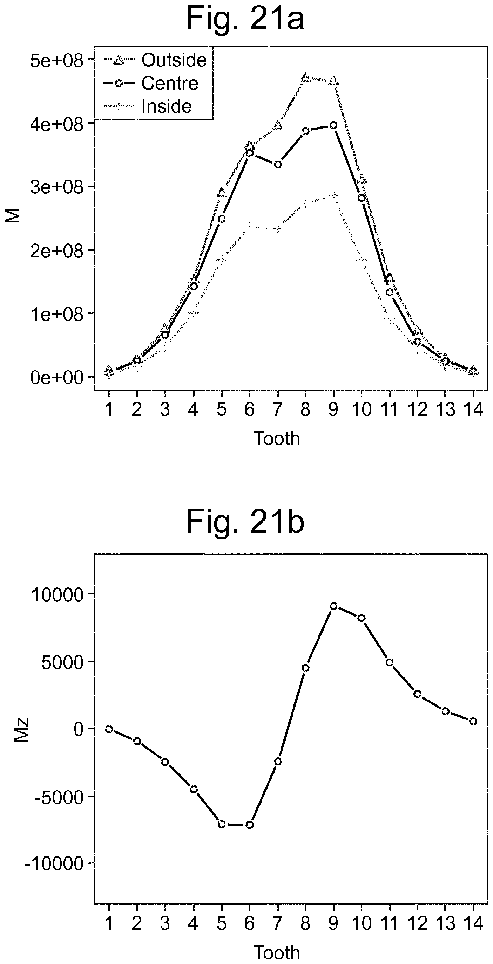

Figures 21a and 21b provide a simple illustration of how magnetic field measurements, particularly the vertical field component M_{z} can be used to capture location of the toothbrush with increased resolution.

In the experiment of Figure 21a, a magnetometer probe was moved along the jaw (in this case an upper jaw). In order to assess the variation around a given jaw, the measurement was repeated for inside, centre, and outside positions. As seen in right plot, the field magnitude M allows position estimation on either the left or right jaw side (Figure 21a). Each number corresponds to a specific tooth of a jaw, where 1-7 are located on the left hand side of the jaw, and 8-14 are located on the right hand side of the jaw.

As shown in Figure 21b, the vertical field component M_{z} breaks the left/right symmetry and its sign can be used to determine whether the device is on the left (tooth 1-7) or right (tooth 8-14) side.

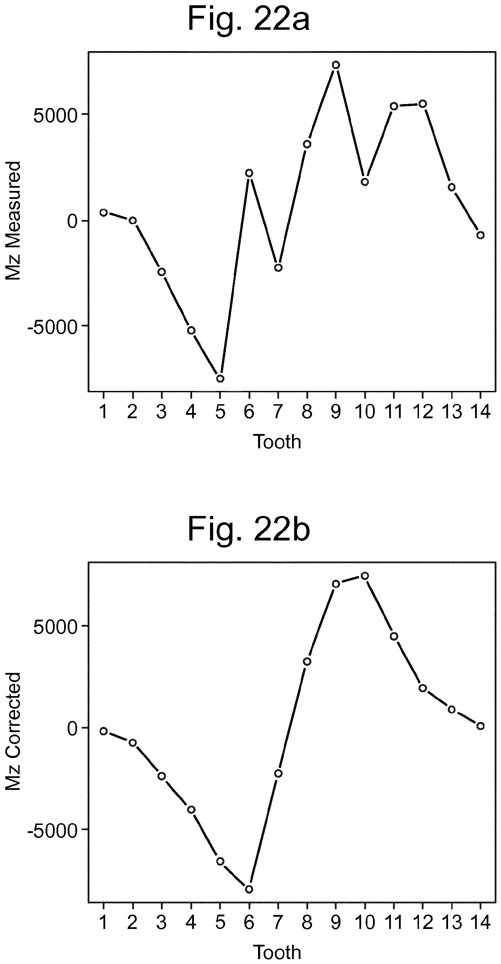

Figure 22 shows an example of further calibration to correct for arbitrary device orientation. To demonstrate the correction for arbitrary device orientation, the probe was held in different orientations for different teeth. The field magnitude is invariant, however, the measured Mz component is strongly affected (Figure 22a). Using the accelerometer data, the gravitational acceleration can be separated from the overall acceleration data using a low pass filter. The acceleration due to gravity can be used as a reference point against which the co-ordinate system is updated to retrieve only the vertical field component (Figure 22b). This is an example of how the combination of multiple sensors can lead to location measurements with an improved accuracy. For example, when the combination of sensors includes a sound sensor, a magnetometer, and an accelerometer, the magnetometer measures position. The sound sensor simplifies interpretation of the data since it can detect when contact is made between the toothbrush head and the jaw so that the measured location can only be located on a position of the jaw. The accelerometer enables the locational data to be improved further because it can be used to correct for the rotational position (orientation) of the toothbrush.

### Sound

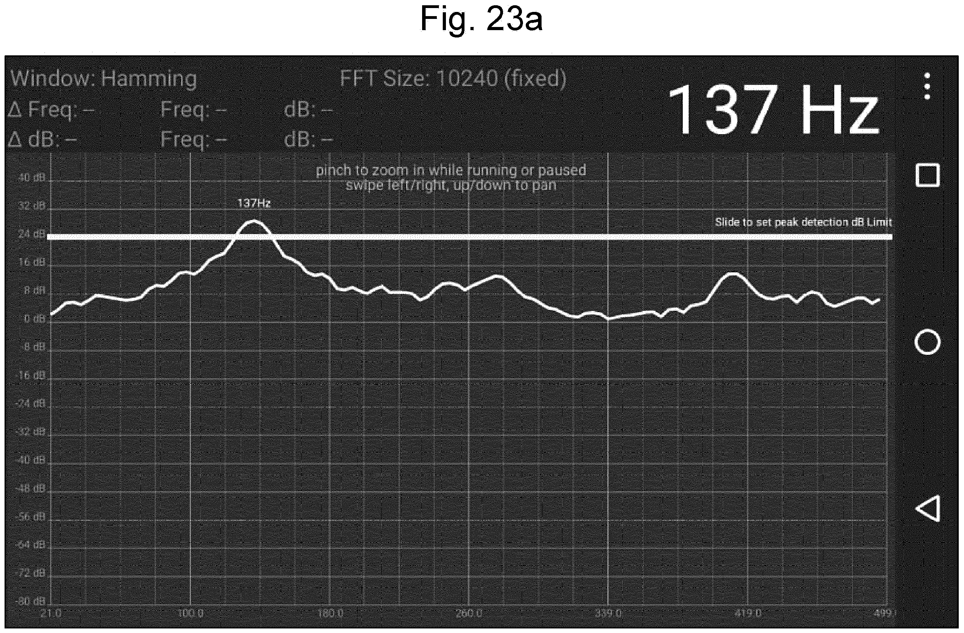

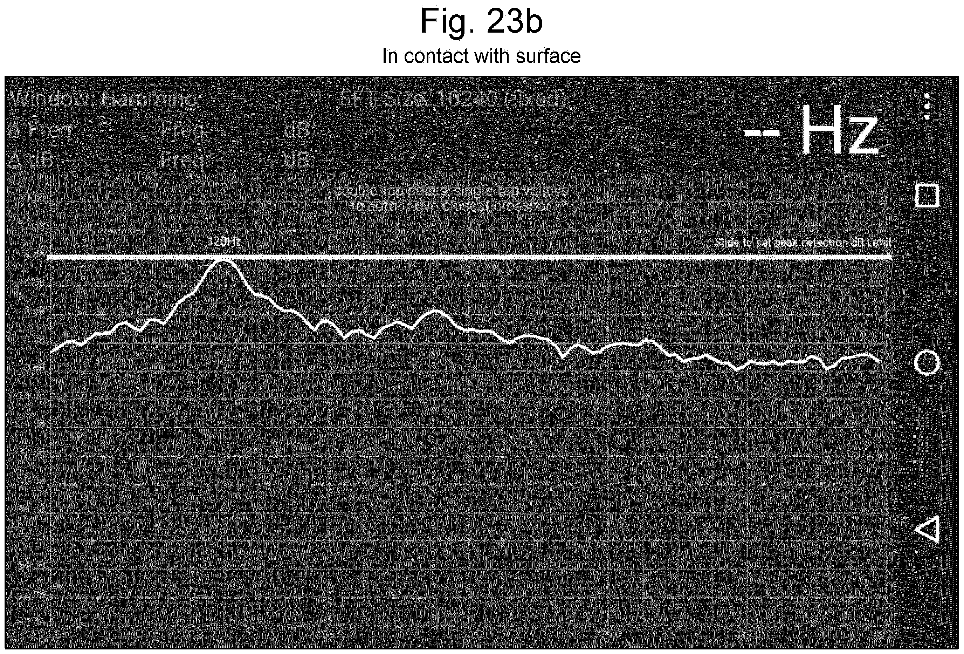

Figure 23 shows an example of an output from a sound receiver of a toothbrush according to or for use with the present invention.

The toothbrush detects changes in the continuous sound spectrum generated by an electric or sonic toothbrush. The sound profile (pitch, magnitude) of an electric or sonic (i.e. vibrating) toothbrush changes when the brush head is in contact with a surface.

The sound is measured by the sound recorder on the toothbrush and recorded. The processor then applies a combination of simple filters and efficient classification techniques (e.g. decision tree) to detect brushing contact based on sound profile changes. In this way, it is possible to avoid resource-hungry sound processing.

Figure 23a depicts a sound frequency spectrum recorded by a sound sensor of the toothbrush during "free vibrations", that is to say, the head of the toothbrush is not in contact with the jaw. When in contact with a tooth surface, as shown in Figure 23b, the additional strain on the electric generator/vibrator leads to shifts in the emitted sound. In this case, from 137Hz to 120Hz. This shift in frequency can be picked up efficiently by the computing module of the toothbrush.

While the invention has been described in conjunction with the exemplary embodiments and background examples described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention, which is defined by the claims.

## Claims

1. A tracking system (1701) for recording the position of a toothbrush during toothbrushing, the system comprising:
a toothbrush (1702), the toothbrush comprising:
a head portion (2);
a handle portion (3);
an orientation sensor (42);
a sensor for detecting contact between the toothbrush and the jaw of a user, the sensor comprising a sound sensor (43); and
a magnetic sensor; and
a magnetic field generator (1703);
wherein the magnetic sensor detects the absolute position of the toothbrush within the field created by the magnetic field generator (1703) upon detection by the sound sensor (43) of contact between the toothbrush and the jaw, the measurement of position within the magnetic field being thereby restricted to a measurement position along a known, pre-calibrated, one-dimensional jaw line.

2. The tracking system (1701) of claim 1, wherein the orientation sensor (42) is an accelerometer or an inertial measurement unit for measuring the rotational position of the toothbrush (1702).

3. The tracking system (1701) of any one of the preceding claims, wherein the magnetic field generator (1703) is a wearable magnetic field generator;
wherein the magnetic sensor detects the absolute position of the toothbrush (1702) within the field created by the magnetic field generator.

4. The tracking system (1701) of any one of the preceding claims, wherein the magnetic field is tuned to generate iso-surfaces of magnitude which lie perpendicular to the jaw.

5. The tracking system (1701) of any one of the preceding claims, wherein the magnetic sensor comprises a processor which detects the absolute position of the toothbrush (1702) by measuring the field magnitude, M of the brush and the vertical field component Mz of the brush.

6. The tracking system (1701) of any one of the preceding claims, therein the toothbrush (1702) comprises:
an electric motor and/or vibrator for providing movement and/or rotation of the head of the toothbrush (1702);
and
a sound receiver for detecting changes in frequency of the electric motor and/or vibrator when the toothbrush (1702) is in contact with a tooth.

7. The tracking system (1701) of claim 6, wherein the toothbrush (1702) comprises
a data logger for recording data from the magnetic sensor and/or the orientation sensor;
wherein the data logger is only activated when the sound receiver detects a value which meets a predetermined threshold criterion.

8. The tracking system (1701) of claim 7, wherein the data logger comprises a memory for recording the detected orientation information and a processor programmed to convert this orientation information into positional information.

9. The tracking system (1701) of claim 7 or claim 8, wherein the sound receiver includes a frequency filter for detecting changes in frequency of the electric motor and/or vibrator when the toothbrush (1702) is in contact with a tooth; and
wherein the data logger is only activated when the sound receiver detects a value which meets a predetermined threshold criterion.

10. The tracking system (1701) of any one of claims 1 to 5, including a further sensor for detecting contact between the toothbrush (1702) and the jaw of a user comprising a pressure sensor; or an accelerometer.

## Patentansprüche

1. Nachverfolgungssystem (1701) zum Aufzeichnen der Position einer Zahnbürste während des Zähneputzens, wobei das System Folgendes umfasst:
eine Zahnbürste (1702), wobei die Zahnbürste Folgendes umfasst:
einen Kopfabschnitt (2);
einen Griffabschnitt (3);
einen Orientierungssensor (42);
einen Sensor zum Detektieren eines Kontakts zwischen der Zahnbürste und dem Kiefer eines Benutzers, wobei der Sensor einen Schallsensor (43) umfasst, und
einen Magnetsensor; und
einen Magnetfeldgenerator (1703);
wobei der Magnetsensor die Absolutposition der Zahnbürste in dem Feld, das durch den Magnetfeldgenerator (1703) erzeugt wird, bei der Detektion eines Kontakts zwischen der Zahnbürste und dem Kiefer durch den Schallsensor (43) detektiert, wobei die Messung der Position im Magnetfeld dabei auf eine Messposition längs einer bekannten, zuvor kalibrierten eindimensionalen Kieferlinie beschränkt ist.

2. Nachverfolgungssystem (1701) nach Anspruch 1, wobei der Orientierungssensor (42) ein Beschleunigungsmesser oder eine Trägheitsmesseinheit zum Messen der Drehposition der Zahnbürste (1702) ist.

3. Nachverfolgungssystem (1701) nach einem der vorhergehenden Ansprüche, wobei der Magnetfeldgenerator (1703) ein tragbarer Magnetfeldgenerator ist; wobei der Magnetsensor die Absolutposition der Zahnbürste (1702) im Feld detektiert, das durch den Magnetfeldgenerator erzeugt wird.

4. Nachverfolgungssystem (1701) nach einem der vorhergehenden Ansprüche, wobei das Magnetfeld eingestellt wird, um Isoflächen bezüglich der Feldstärke zu erzeugen, die senkrecht zum Kiefer liegen.

5. Nachverfolgungssystem (1701) nach einem der vorhergehenden Ansprüche, wobei der Magnetsensor einen Prozessor umfasst, der die Absolutposition der Zahnbürste (1702) durch Messen der Feldstärke M der Bürste und der vertikalen Feldkomponente Mz der Bürste detektiert.

6. Nachverfolgungssystem (1701) nach einem der vorhergehenden Ansprüche, wobei die Zahnbürste (1702) Folgendes umfasst:
einen Elektromotor und/oder eine Vibrationsvorrichtung zum Bereitstellen einer Bewegung und/oder Drehung des Kopfs der Zahnbürste (1702);
und
einen Schallempfänger zum Detektieren von Änderungen der Frequenz des Elektromotors und/oder der Vibrationsvorrichtung, wenn die Zahnbürste (1702) mit einem Zahn in Kontakt ist.

7. Nachverfolgungssystem (1701) nach Anspruch 6, wobei die Zahnbürste (1702) einen Datenlogger zum Aufzeichnen von Daten vom Magnetsensor und/oder vom Orientierungssensor umfasst,
wobei der Datenlogger nur aktiviert wird, wenn der Schallempfänger einen Wert detektiert, der ein vorgegebenes Schwellenwertkriterium erfüllt.

8. Nachverfolgungssystem (1701) nach Anspruch 7, wobei der Datenlogger einen Speicher zum Aufzeichnen der detektierten Orientierungsinformationen und einen Prozessor, der zum Umsetzen dieser Orientierungsinformationen in Positionsinformationen programmiert ist, umfasst.

9. Nachverfolgungssystem (1701) nach Anspruch 7 oder Anspruch 8, wobei der Schallempfänger einen Frequenzfilter zum Detektieren von Änderungen der Frequenz des Elektromotors und/oder der Vibrationsvorrichtung umfasst, wenn die Zahnbürste (1702) mit einem Zahn in Kontakt ist; und
wobei der Datenlogger nur aktiviert wird, wenn der Schallempfänger einen Wert detektiert, der ein vorgegebenes Schwellenwertkriterium erfüllt.

10. Nachverfolgungssystem (1701) nach einem der Ansprüche 1 bis 5, das einen weiteren Sensor zum Detektieren eines Kontakts zwischen der Zahnbürste (1702) und dem Kiefer eines Benutzers umfasst, der einen Drucksensor oder einen Beschleunigungsmesser umfasst.

## Revendications

1. Système de suivi (1701) pour enregistrer la position d'une brosse à dents pendant un brossage de dents, le système comprenant :
une brosse à dents (1702), la brosse à dents comprenant :
une portion de tête (2) ;
une portion de manche (3) ;
un capteur d'orientation (42) ;
un capteur pour détecter un contact entre la brosse à dents et la mâchoire d'un utilisateur, le capteur comprenant un capteur de son (43) ; et
un capteur magnétique ; et
un générateur de champ magnétique (1703) ;
dans lequel le capteur magnétique détecte la position absolue de la brosse à dents dans le champ créé par le générateur de champ magnétique (1703) par détection par le capteur de son (43) de contact entre la brosse à dents et la mâchoire, la mesure de position dans le champ magnétique étant par-là restreinte à une position de mesure le long d'une ligne de mâchoire connue, pré-calibrée, unidimensionnelle.

2. Système de suivi (1701) selon la revendication 1, dans lequel le capteur d'orientation (42) est un accéléromètre ou une unité de mesure d'inertie pour mesurer la position de rotation de la brosse à dents (1702).

3. Système de suivi (1701) selon l'une quelconque des revendications précédentes, dans lequel le générateur de champ magnétique (1703) est un générateur de champ magnétique portable ;
dans lequel le capteur magnétique détecte la position absolue de la brosse à dents (1702) dans le champ créé par le générateur de champ magnétique.

4. Système de suivi (1701) selon l'une quelconque des revendications précédentes, dans lequel le champ magnétique est ajusté pour générer des iso-surfaces d'amplitude qui sont perpendiculaires à la mâchoire.

5. Système de suivi (1701) selon l'une quelconque des revendications précédentes, dans lequel le capteur magnétique comprend un processeur qui détecte la position absolue de la brosse à dents (1702) en mesurant l'amplitude de champ, M de la brosse et le constituant de champ vertical Mz de la brosse.

6. Système de suivi (1701) selon l'une quelconque des revendications précédentes, dans lequel la brosse à dents (1702) comprend :
un moteur électrique et/ou un vibrateur pour fournir un mouvement et/ou une rotation de la tête de la brosse à dents (1702) ;
et
un récepteur de son pour détecter des modifications de fréquence du moteur électrique et/ou du vibrateur lorsque la brosse à dents (1702) est en contact avec une dent.

7. Système de suivi (1701) selon la revendication 6, dans lequel la brosse à dents (1702) comprend un collecteur de données pour enregistrer des données du capteur magnétique et/ou du détecteur d'orientation ;
dans lequel le collecteur de données est uniquement activé lorsque le récepteur de son détecte une valeur qui remplit un critère de seuil prédéterminé.

8. Système de suivi (1701) selon la revendication 7, dans lequel le collecteur de données comprend une mémoire pour enregistrer l'information d'orientation détectée et un processeur programmé pour convertir cette information d'orientation en information de position.

9. Système de suivi (1701) selon la revendication 7 ou revendication 8, dans lequel le récepteur de son inclut un filtre de fréquence pour détecter des modifications de fréquence du moteur électrique et/ou vibrateur lorsque la brosse à dents (1702) est en contact avec une dent ; et
dans lequel le collecteur de données est uniquement activé lorsque le récepteur de son détecte une valeur qui remplit un critère de seuil prédéterminé.

10. Système de suivi (1701) selon l'une quelconque des revendications 1 à 5, incluant un capteur supplémentaire pour détecter un contact entre la brosse à dents (1702) et la mâchoire d'un utilisateur comprenant un capteur de pression, ou un accéléromètre.
